# EUROPEAN PATENT SPECIFICATION

(11) **EP 4 266 510 B1**
(45) Date of publication and mention of the grant of the patent: **25.03.2026**
(21) Application number: 23167931.7
(22) Date of filing: 14.04.2023
(51) Int. Cl.: H01R 13/631, H02G 3/18, H01R 24/78

(54) **PLUG-IN MODULE, SET COMPRISING SAID PLUG-IN MODULE AND A WALL BOX, AND METHOD FOR CONNECTING THE PLUG-IN MODULE TO AN END CONNECTOR OF A CABLE WITHIN THE WALL BOX**
STECKMODUL, SET UMFASSEND DAS STECKMODUL UND EINE WANDDOSE UND VERFAHREN ZUM VERBINDEN DES STECKMODULS MIT EINEM ENDVERBINDER EINES KABELS INNERHALB DER WANDDOSE
MODULE ENFICHABLE, ENSEMBLE COMPRENANT LEDIT MODULE ENFICHABLE ET UN BOÎTIER MURAL ET PROCÉDÉ DE CONNEXION DU MODULE ENFICHABLE À UN CONNECTEUR D'EXTRÉMITÉ D'UN CÂBLE À L'INTÉRIEUR DU BOÎTIER MURAL

(30) Priority: 22.04.2022 NL 2031677
(43) Date of publication of application: 25.10.2023
(73) Proprietor: Isolectra B.V., 3072 AP Rotterdam (NL)
(72) Inventor: PALS, Ludovicus Quirinus Maria, 3072 AP Rotterdam (NL); VAESSEN, Wilhelmus Theodorus Erik, 3072 AP Rotterdam (NL)
(74) Representative: Melchior, Robin

(56) References cited:
- EP-A1- 2 937 948
- US-A1- 2021 104 855
- US-A1- 2021 281 029

## Description

### BACKGROUND

The invention relates to a plug-in module, a set comprising said plug-in module and a wall box, and a method for connecting the plug-in module to an end connector of a cable within the wall box.

US 2009/235515 A1 discloses a plug and play utility control module, such as a light socket, a switch or a plug socket, that is designed with universal terminals so that when plugged into a pre-wired utility box, the terminals will make the proper electrical connections with pre-wired connectors in the spaced defined by said utility box. The connectors are shown on the back wall, while it is mentioned that one or more connectors can be placed on any interior surface of the utility box, if desired. The signals transmitted can be electrical signals, but also optical signals.

US 2021/104855 A1 discloses a modular power distribution system that forms predetermined electrical connections between clients and a power source cable once the clients are installed into their corresponding hosts. In operation, keying features serve to prevent the client from being inserted in an incorrect orientation (e.g., upside down about a horizontal axis, or sideways about a vertical axis) and thereby ensure that contacts of the client align with the correct contacts of host electrical coupler situated in rear compartment for a particular application.

### SUMMARY OF THE INVENTION

In modern prefab housing, concrete is casted with the cables, wiring and wall boxes already in place. The wall boxes may move slightly during the casting, making their final position within the cured wall potentially inaccurate.

A disadvantage of the plug and play system known from US 2009/235515 A1 is that the position and/or orientation of the plug and play utility control module, when plugged into the pre-wired utility box, needs to be fully inserted and precisely aligned with the pre-wired utility box in order to make the proper electrical connections. In particular when making an optical connection, only very small tolerances are acceptable.

In other words, the plug and play utility control module can no longer be adjusted to correct for any misalignment of the pre-wired utility box without affecting the quality of the connections. Hence, if the pre-wired utility box is not completely level, parallel and/or flush with the surface of the wall in which it is fitted, the orientation and/or position of the plug and play utility control module will appear crooked.

The alternative is to use a more conventional electrical fixture which allows for more flexibility in the adjustment of the position and/or orientation relative to the wall box. Those conventional fixtures however require manual connection to the cables and/or wiring in the wall box and are therefore more difficult to install by an inexperienced end user.

US 2021/104855 A1 similarly comes with host electrical couplers which have to be manually coupled to the power source cable situated in rear compartment of the host, before allowing to establish contact between the host electrical coupler and the contacts of the clients.

It is an object of the present invention to provide a plug-in module, a set comprising said plug-in module and a wall box, and a method for connecting the plug-in module to an end connector of a cable within the wall box, wherein the plug-in module can be installed more easily by an inexperienced end user or an uncertified installer, even if the position and/or orientation of the wall box in the wall is inaccurate.

According to a first aspect, the invention provides a plug-in module for connecting to a first end connector of a first cable within a wall box, wherein the plug-in module comprises a front side for receiving a front panel, a rear side opposite to the front side and a plug-in body extending in a plug-in direction from the front side towards the rear side for plugging into the wall box in said plug-in direction, wherein the plug-in module further comprises a coupling mechanism that is arranged for self-aligning with the first end connector and for self-connecting to the first end connector in a connection direction transverse to the plug-in direction in response to plugging the plug-in body into the wall box in the plug-in direction.

Because the coupling mechanism is configured, adapted and/or arranged to operate in response to the plugging in of the plug-in body in the plug-in direction, no manual intervention is necessary to establish the connection with the first end connector other than inserting the plug-in module in the plug-in direction. The connection can thus be established conveniently in a 'plug-and-play' manner in an area of the wall box that is inaccessible or unreachable for the end-user during the plugging in of the plug-in body.

Moreover, by self-aligning and self-connecting, the plug-in module can be connected to the first end connector even if the plug-in module is plugged into the wall box in an orientation and/or a position that is slightly different to the orientation and/or the position of the wall box. More in particular, the self-aligning allows for the coupling mechanism to find or locate the first end connector in the wall box, while the self-connecting ensures that, once plugged in, the plug-in module is properly, tightly, reliably and/or securely connected to the first end connector, regardless of misalignments between said plug-in module and the wall box. This can be particularly useful when connecting to optical conductors, in particular optical fibers, which require precise alignment.

Moreover, by connecting to the first end connector in the connection direction transverse to the plug-in direction, it is not necessary for the plug-in module to be fully inserted into the wall box, for example when the wall box is positioned to deep in the wall.

In one embodiment the connection direction is perpendicular to the plug-in direction. The coupling mechanism can thus be moved along the first end connector in the plug-in direction while simultaneously connecting to said first end connector in the connection direction. In particular, the coupling mechanism is designed in such a way that it is not necessary for the plug-in module to be fully inserted into the wall box in the plug-in direction in order to establish a reliable connection with the first end connector in the connection direction. Moreover, by receiving the first end connector in said perpendicular connection direction, the first cable can approach the wall box and the plug-in module in a plane parallel to the wall. Consequently, less space is required in the wall behind the wall box to facilitate entry of the first cable into said wall box.

In a further embodiment the coupling mechanism comprises a first locating member that is movable with respect to the plug-in body to self-align with the first end connector. The freedom of movement of the first locating member relative to the plug-in body enables the ability of said first locating member to self-align with the first end connector.

Preferably, the first locating member is movable with respect to the plug-in body in one or more directions of the plug-in direction, the connection direction and a lateral direction transverse to the connection direction and the plug-in direction. Hence, the first locating member can find or locate the first end connector regardless of misalignments in one or more of the aforementioned directions.

Additionally or alternatively, the first locating member is movable with respect to the plug-in body about one or more axes of a plug-in axis parallel to the plug-in direction, an connection axis parallel to the connection direction and a lateral axis parallel to a lateral direction transverse to the connection direction and the plug-in direction. Hence, the first locating member can find or locate the first end connector regardless of misalignments about one or more of the aforementioned axes.

In a further embodiment the coupling mechanism comprises a holder for holding the first locating member relative to the plug-in body.

Preferably, the holder comprises one or more flexible members for providing freedom of movement to the first locating member relative to the plug-in body. The one or more flexible members may for example be springs or other suitable resiliently and/or elastically deformable elements.

Additionally or alternatively, wherein the holder comprises a first printed circuit board. The first printed circuit board can function both as a part of the holder and as an electronic means to process signals transmitted via the connection between the coupling mechanism and the first end connector. Preferably, the first printed circuit board itself is flexible. The first printed circuit board can thus provide freedom of movement to the first locating member to allow for the self-alignment.

Additionally or alternatively, the plug-in module comprises a second printed circuit board that is fixed relative to the plug-in body, wherein the holder is arranged below the second printed circuit board in the plug-in direction. The second printed circuit board may for example be associated with and/or electronically connected to outlet ports of the plug-in module or hold a wireless communication unit. In the position below the second printed circuit board, the holder can be positioned closer to the first end connector when plugging the plug-in module into the wall box, thereby establishing the connection in a way that does not interfere with the operation of the second printed circuit board.

In another embodiment the first end connector is provided with a flange, wherein the first locating member comprises one or more hooks for hooking over said flange in the plug-in direction. The hooks can be used to locate the flange and subsequently align the first locating member with respect to the position of the flange.

Preferably, each hook of the one or more hooks defines an internal wedge surface that is arranged at an oblique angle to the plug-in direction for progressively pulling in the flange in an entry direction parallel to the connection direction when plugging the plug-in body into the wall box in the plug-in direction. By progressively pulling in the flange, the first end connector can be pulled towards the coupling mechanism until the connection between the coupling mechanism and the first end connector is established.

More preferably, each hook of the one or more hooks comprises a hook-shaped body and a resilient finger extending inside said hook-shaped body to define the internal wedge surface. The resilience of the resilient finger can bias the flange in a direction towards the coupling mechanism for establishing and maintaining a reliable connection.

In another embodiment the coupling mechanism comprises a second locating member spaced apart from the first locating member and movable with respect to the plug-in body to self-align with and self-connect to a second end connector of a second cable. The plug-in module can thus be connected to two end connectors of two cables simultaneously.

Preferably, the second locating member is movable in unison with the first locating member. Any misalignment of the plug-in module relative to the wall box will typically affect the connection of the coupling mechanism to the second end connector in the same way as the connection to the first end connector. Hence, both locating members can be moved in the same direction and/or in the same way. The locating members may for example be carried by or mounted to a common holder.

In another embodiment the plug-in body comprises a housing having a rear wall that defines the rear side of the plug-in module and a circumferential wall connected to said rear wall, wherein the plug-in module is provided with a connector accommodation aperture extending continuously in both the rear wall and the circumferential wall for accommodating the first end connector at least partially within the housing when the plug-in module is plugged into the wall box in the plug-in direction. The housing can shield at least a part of the internals of the plug-in module that would otherwise be exposed and vulnerable to damage or pollution. Meanwhile, the connector accommodation aperture can expose only the part of the coupling mechanism that is used to receive the first end connector and establish the connection with said first end connector.

In another embodiment the first cable is a hybrid cable having one or more first conductors and one or more second conductors of different type to the one or more first conductors, wherein the coupling mechanism is arranged for self-aligning with and self-connecting to the one or more first conductors. Hence, the plug-in module can be connected to at least the one or more first conductors with the use of the coupling mechanism. The plug-in module may connect to the one or more second conductors in the same way or in a different **way.**

Preferably, the one or more first conductors are optical conductors, preferably optical fibers and more preferably plastic optical fibers, wherein the coupling mechanism comprises one or more optical connectors for connecting to said one or more first conductors. As mentioned already before, the self-aligning and self-connecting is particularly useful when connecting to optical conductors which require precise alignment and a secure connection to reliably transmit optical signals.

In another embodiment an adapter is provided at the wall box for fitting the first end connector to the wall box in an entry direction parallel to the connection direction, wherein the plug-in module comprises one of a plug and a socket for establishing a plug-and-socket connection between the **plug-in** module and the adapter in the plug-in direction. The plug-and-socket connection can be used to establish a connection with one or more of the conductors in a direction other than the connection direction. This may only be suitable for connections with conductors that require a less precise positioning and/or alignment, because of greater tolerances between the plug and socket to absorb any misalignment in directions transverse or perpendicular to the **plug-in** direction or about a plug-in axis parallel to said plug-in direction.

Preferably, the adapter defines one or more conductive paths for establishing a conductive connection between the one or more second conductors in the connection direction and said one of the plug and the socket in the plug-in direction. The adapter can therefore function as a bridge to establish an indirect connection, via the one or more conductive paths, between the one or more second conductors and the plug-in module.

More preferably, the one or more second conductors are electrical conductors, wherein said one of the plug and the socket of the plug-in module comprises one or more contacts for electrically contacting said one or more conductive paths in the plug-in direction. Unlike the optical conductors, the electric conductors do not require a precise positioning or alignment and may be connected, directly or indirectly, to the plug-in module in a direction other than the connection direction.

Most preferably the one or more contacts are configured for establishing electrical contact even when said one of the plug and the socket of the plug-in module is not fully aligned with said one or more conductive paths. Hence, the electrical contact can be made with some tolerance, i.e. with a few degrees or a few millimeters offset.

In another embodiment, that can also be applied independently of the coupling mechanism, the plug-in module is provided with one or more first convex guides and one or more second convex guides on a first lateral side and a second lateral side, respectively, of the plug-in body in a lateral direction perpendicular to the plug-in direction and the connection direction for engaging with concave guides at the wall box. The convex guides can facilitate a tilt or rotation of the plug-in module relative to the wall box to level the plug-in module horizontally when the wall box is in a crooked orientation in the wall.

Preferably, the one or more first convex guides and the one or more second convex guides are concentric to a tilt axis parallel to the plug-in direction. The plug-in module can thus be tilted or rotated relative to the wall box about said tilt axis.

In one embodiment the tilt axis is arranged at a center between the first lateral side and the second lateral side. In other words, the one or more first convex guides and the one or more second convex guides have the same radius to the tilt axis. Therefore, the amount of angular displacement as a result of the tilt or rotation about the tilt axis is the same for both lateral sides.

Alternatively, the tilt axis is arranged off-center relative to a center between the first lateral side and the second lateral side. In other words, the one or more first convex guides are arranged at a first radius to the tilt axis and the one or more second convex guides are arranged at a second radius to the tilt axis, different from the first radius. Consequently, the convex guides can facilitate a tilt or rotation of the plug-in module about a common tilt axis while the amount of angular displacement as a result of said tilt or rotation is larger at one of the lateral sides with respect to the other of the lateral sides.

Preferably, the plug-in module is arranged for connecting to the first end connector in a connection area that is off-center relative to a center between the first lateral side and the second lateral side in the same direction as the tilt axis. Hence, the connection between the plug-in module and the first end connector can be made in a position that is off center towards the lateral side that is least influenced by the tilt about the tilt axis. In particular, the connection area may be chosen as close as possible to or at the position of the tilt axis where the influence of the tilt or rotation on the angular displacement of the plug-in module with respect to the wall box at the connection area is minimal.

In another embodiment each convex guide of the one or more first convex guides and the one or more second convex guides, in cross section, defines a tooth that is arranged for a stepwise adjustable engagement with the concave guides at the wall box. The teeth of the convex guides can be forced along the concave guides by exerting sufficient pushing force onto the plug-in module in the plug-in direction. The teeth can subsequently snap into engagement with the concave guides at the wall box to retain the plug-in module in the chosen position when the pushing force is no longer exerted. In this manner, the distance over which the plug-in body is plugged into the wall box can be adjusted equally for both lateral sides, for example when the wall box is installed flush with or parallel to the wall, or unequally for the lateral sides, for example when the wall box is positioned deeper into the wall at one lateral side with respect to the other lateral side. When the distance is adjusted unequally, the plug-in module is effectively rotated or tilted about the connection axis or an adjustment axis parallel to said connection axis.

Preferably, the tooth is arranged for the stepwise adjustable engagement in one-way only in the plug-in direction. Hence, the plug-in module can be pushed further into the wall box, yet it cannot be easily retracted without the use of tools or damage to the teeth.

In another embodiment, that can be applied independently of the coupling mechanism, the plug-in module comprises at least three outlet sections each having one or more ports or a communication unit for connection to external appliances, wherein the at least three outlet sections are arranged side-by-side between a first lateral side and a second lateral side of the plug-in body in a lateral direction perpendicular to the plug-in direction and the connection direction, wherein the plug-in module is arranged for connecting to the first end connector in a connection area that is off-center relative to a center between the first lateral side and the second lateral side. By keeping the connection area off-center, a range of plug-in modules can be provided with three outlet units or more, while the connection area remains in substantially the same position regardless of the amount of outlet sections as the connection area of a plug-in module with only two outlet sections. In other words, the number of outlet sections can be expanded at one of the lateral sides while keeping the connection area in the same relative position to the other lateral side. This can be useful when replacing existing plug-in modules with expanded alternatives, in which case the slot in the wall has to be expanded at one side only. Moreover, the plug-in module can still be tilted about the aforementioned off-center tilt axis with the previously mentioned technical advantages of such an off-center tilt axis.

Preferably, the connection area is located in the lateral direction between the first lateral side and a center between a pair of outlet sections of the at least three outlet sections adjacent to the first lateral side. Hence, the connection area can be kept in the same or substantially the same position relative to the closest lateral side regardless of the amount of outlet sections. In particular, the connection area can be maintained in the same position as the connection area of a plug-in module with only two outlet sections.

According to a second aspect, the invention provides a set of a plug-in module according to any one of the previously discussed embodiments of the first aspect and a wall box.

The set includes the aforementioned plug-in module according to the first aspect of the invention and thus has the same technical advantages, which will not be repeated hereafter.

It is further noted that the features of the wall box described hereafter may also be applied independently of the set, and thus independently of the plug-in module.

Preferably, the wall box is arranged for receiving the first cable along a connection axis parallel to the connection direction.

In another embodiment the set further comprises an adapter provided at the wall box for fitting the first end connector to said wall box in an entry direction parallel to the connection direction.

Preferably, the adapter comprises one or more through holes for passing through at least a part of the first end connector in an entry direction parallel to the connection direction for direct connection to the coupling mechanism of the plug-in module.

Additionally or alternatively, the adapter is removable from the wall box. Hence, the adapter can be replaced or exchanged with an alternative adapter for fitting a different end connector or a different number of end connectors to the wall box.

In a further embodiment the adapter is provided at an adapter position that is off-center relative to the center between a first lateral side and a second lateral side of the plug-in body in a lateral direction perpendicular to the plug-in direction and the connection direction.

Preferably, the plug-in module comprises at least three outlet sections each having one or more ports or a communication unit for connection to external appliances, wherein the at least three outlet sections are arranged side-by-side between a first lateral side and a second lateral side of the plug-in body in a lateral direction perpendicular to the plug-in direction and the connection direction, wherein the adapter position is located, when the plug-in body is plugged into the wall box, in the lateral direction between the first lateral side and a center between a pair of outlet sections of the at least three outlet sections adjacent to the first lateral side.

According to a third aspect, the invention provides a method for connecting a plug-in module to a first end connector of a first cable within a wall box with the use of the set according to any one of the embodiments of the second aspect of the invention, wherein the method comprises the steps of:
- plugging the plug-in body into the wall box in the plug-in direction towards a first end connector extending at least partially into the wall box in an entry direction parallel to the connection direction;
- allowing the coupling mechanism to self-align with the first end connector in response to plugging the plug-in body further into the wall box in the plug-in direction; and
- allowing the coupling mechanism to self-connect to the first end connector in the connection direction in response to plugging the plug-in body further into the wall box in the plug-in direction.

The method relates to the practical implementation of the set to establish the connection to the first end connector, in accordance with the first and/or second aspect of the invention. The method thus has the same technical advantages, which will not be repeated hereafter.

In one embodiment of the method the first cable is a hybrid cable having one or more first conductors and one or more second conductors of different type to the one or more first conductors, wherein the coupling mechanism self-aligns with and self-connects to the one or more first conductors.

Preferably, the one or more first conductors are optical conductors, preferably optical fibers and more preferably plastic optical fibers.

In another embodiment of the method, the one or more second conductors are electrical conductors.

In another embodiment, that can also be applied independently of the coupling mechanism, the method further comprises the steps of:
- tilting the plug-in module relative to the wall box about a tilt axis parallel to the plug-in direction.

In another embodiment the method further comprises the step of:
- adjusting the plug-in module relative to the wall box about an adjustment axis parallel to the connection direction.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached schematic drawings, in which:
figure 1 shows an isometric view of a set of a plug-in module and a wall box for receiving said plug-in module according to a first exemplary embodiment of the invention;
figure 2 shows an isometric view of a coupling mechanism of the plug-in module according to figure 1;
figures 3A-3D show, in cross section, side views of the set of figure 1 during the steps of a method for connecting the plug-in module to a first end connector of a first cable within the wall box;
figures 4A and 4B show, in cross section, top views of the set of figure 1 during the steps of a method of tilting the plug-in module relative to the wall box about a tilt axis;
figures 5A and 5B show, in cross section, front views of the set of figure 1 during the step of a method of adjusting the plug-in module relative to the wall box about an adjustment axis;
figures 6A and 6B show isometric views of the set of figure 1 during the steps of a method of establishing a plug-and-socket connection between the plug-in module and the wall box; and
figure 7 shows a top view of an alternative set of a plug-in module and a wall box according to a second exemplary embodiment of the invention.

### DETAILED DESCRIPTION OF THE INVENTION

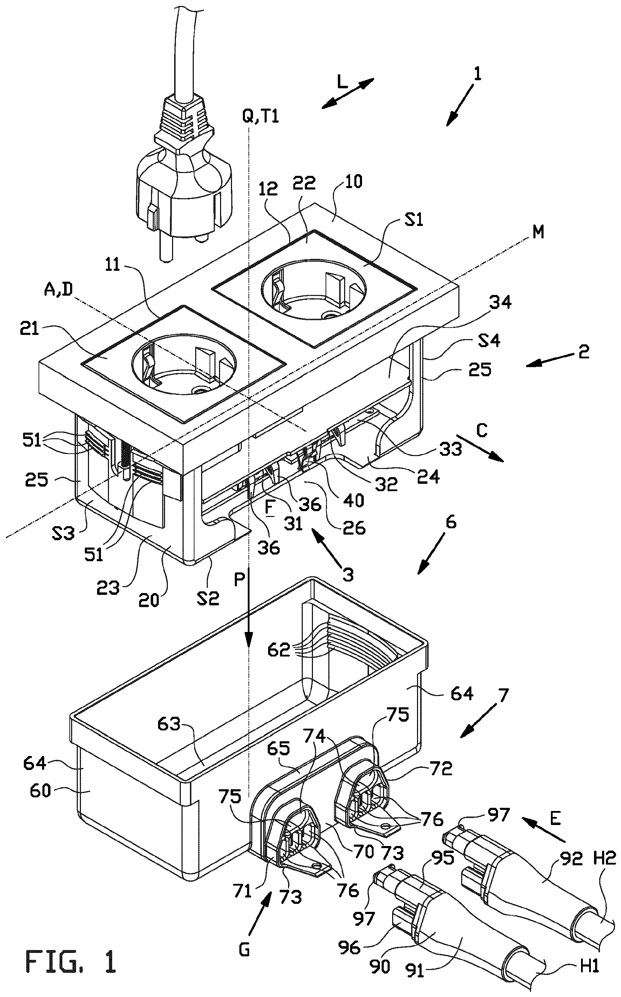

Figures 1, 3A-3D, 4A, 4B, 5A, 5B, 6A and 6B show a set 1 of a plug-and-play module or a plug-in module 2 and a utility box or a wall box 6 according to a first exemplary embodiment of the invention.

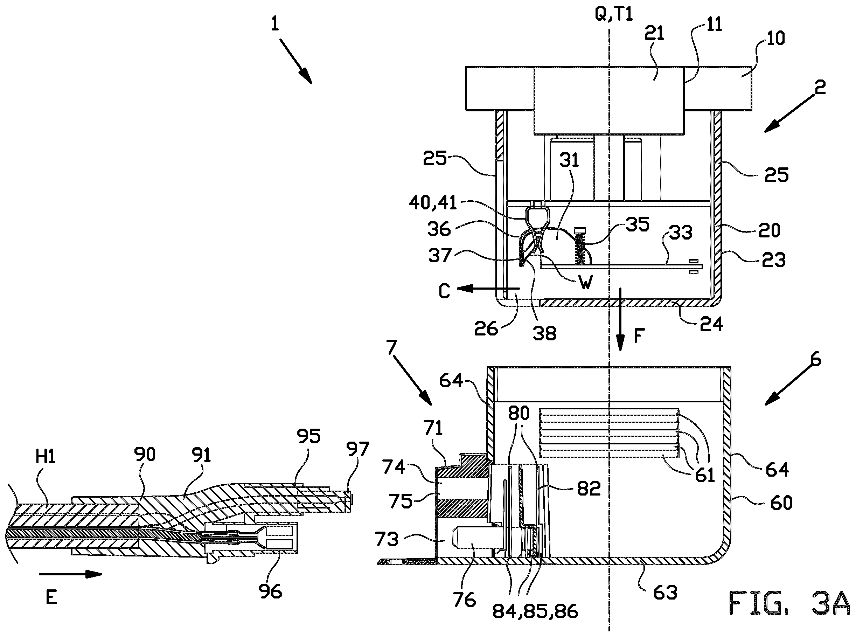

As best seen in figures 3A-3D, the plug-in module 2 is dimensioned, adapted, configured or arranged to be plugged into the wall box 6. When plugged in, the plug-in module 2 is automatically connected to a first end connector 91 of a first cable H1, in particular a hybrid cable, that extends into said wall box 6 in an entry direction E. When connected, the plug-in module 2 forms a part of a system or network supplying electricity, data, communication or a combination thereof to a domestic, commercial, business or industrial environment.

The first cable H1 has one or more first conductors of a first type and one or more second conductors of a second type, different from the first type. In this example, the one or more first conductors are optical conductors, in particular optical fibers or plastic optical fibers. The one or more second conductors are electrical conductors, in particular a live conductor, a neutral conductor and an earth conductor.

As best seen in figure 3A, the first end connector 91 is used to terminate the first cable H1. The first end connector 91 has a first connector section 95 for terminating the one or more first conductors and a second connector section 96 for terminating the one or more second conductors. In this exemplary embodiment, the first connector section 95 extends or protrudes beyond the second connector section 96. At a distal end thereof, the first connector section 95 is provided with a rim or a flange 97. The second connector section 96 is recessed with respect to the first connector section 95. In this example, the first connector section 95 presents the one or more first conductors in an exposed manner for establishing a coupling. The second connector section 96 is formed so as to shield the one or more second conductors and is configured for a more plug-and-socket like interaction.

Optionally, as shown in figure 1, the plug-in module 2 may be configured, adapted or arranged for automatically connecting to a second end connector 92 of a second cable H2 that extends into the wall box 6 in the entry direction E parallel to the first cable H1 and the first end connector 91.

As further shown in figure 1, the plug-in module 2 is provided with a number of outlet sections 21, 22, each having one or more ports or a communication unit for connection to or communication with external appliances, either wired or wireless. The outlet sections 21, 22 may be of the group comprising, but not limited to: electrical sockets, data sockets, switches, wireless communication units, a buzzer or a combination thereof.

The set 1 may optionally include a front plate or a front panel 10 that is mounted to the plug-in module 2 prior to or after the plug-in module 2 is plugged into the wall box 6. The front panel 10 has a number of front panel sections 11, 12 equal to the number of outlet sections 21, 22 with appropriate openings to facilitate direct connection to the ports of the respective outlet sections 21, 22 or just a blind cover in case of the respective outlet section 21, 22 being a wireless communication unit, a buzzer, etc.

The plug-in module 2 has a front side S1 for receiving the front panel 10, a rear side S2 opposite to the front side S1 and a plug-in body 20 extending in a plug-in direction P from the front side S1 towards the rear side S2 for plugging into the wall box 6 in said plug-in direction P. In this exemplary embodiment, the plug-in body 20 comprises a housing 23 having a rear wall 24 that defines the rear side S2 of the plug-in module 2 and a circumferential wall 25 connected to and standing up from said rear wall 24. The housing 23 can shield at least a part of the internals of the plug-in module 2 that would otherwise be exposed and vulnerable to damage or pollution. The plug-in body 20 has a first lateral side S3 and a second lateral side S4, opposite to the first lateral side S3, in a lateral direction L perpendicular to the plug-in direction P.

The plug-in module 2 further comprises a coupling mechanism 3 that is configured, adapted or arranged for self-aligning with the first end connector 91. Once aligned, the coupling mechanism 3 is further configured, adapted or arranged for self-connecting to the first end connector 91 in a connection direction C transverse or perpendicular to the plug-in direction P in response to plugging the plug-in body 20 into the wall box 6 in the plug-in direction P. In other words, the connection direction C is parallel or substantially parallel to the plane of the wall, when the wall box 6 is fitted with its opening flush with said wall. In this exemplary embodiment, the connection direction C is also transverse or perpendicular to the lateral direction L.

In the context of the present invention, the terms 'self-aligning' and 'self-connecting' are to be interpreted as the ability of the coupling mechanism 3 to automatically and/or autonomously, i.e. without direct manual intervention or manipulation of the parts of the coupling mechanism 3, align and/or connect to the first end connector 91.

As best seen in figure 1, the plug-in body 2 is provided with a connector accommodation aperture 26 extending continuously in both the rear wall 24 and the circumferential wall 25 of the housing 20. The connector accommodation aperture 26 defines a connection area F. The first end connector 91 is arranged to extend at least partially into the wall box 6 and into the connection area F. In other words, the connector accommodation aperture 26 and the connection area F can accommodate the first end connector at least partially within the housing 20 when the plug-in module 2 is plugged into the wall box 6 in the plug-in direction P.

The wall box 6 has a wall box body 60 that is dimensioned, adapted, configured or arranged to receive the plug-in module 2 in the plug-in direction P. The wall box body 60 comprises a rear wall 63 and a circumferential wall 64 connected to and standing up from said rear wall 63 to define a space to receive the plug-in module 2. The wall box 6 is further provided with an adapter opening 65 at an adapter position G in the circumferential wall 64 for receiving an adapter 7 at said adapter position G. When the plug-in module 2 is plugged into the wall box 6, the adapter position G is directly opposite to the connection area F defined by the coupling mechanism 3. The adapter 7 is configured, adapted or arranged for fitting the first end connector 91 to the wall box 6 in an entry direction E parallel to the connection direction C.

In this example, the adapter 7 has an adapter body 70 with a first fitting port 71 and a second fitting port 72 for receiving and/or fitting the first end connector 91 of the first cable 91 and, optionally, the second end connector 92 of the second cable H2. The adapter 7 may alternatively have a single fitting port or more than two fitting ports.

Each fitting port 71, 72 comprises a first port section 73 and a second port section 74 for fitting or receiving the first connector section 95 and the second connector section 96, respectively, of the first end connector 91. The fitting ports 71, 72 will be described hereafter with reference to the first fitting port 71 and the first end connector 91 only. However, the same principle can be applied *mutatis mutandis* to the second fitting port 72 and the second end connector 92. In this example, the first port section 73 has one or more through openings 75 for passing the first connector section 95 through the wall box 6 in the entry direction E. Hence, said first connector section 95 can protrude at least partially into the wall box 6 towards the plug-in module 2 for direct connection of the one or more first conductors contained therein to the coupling mechanism 3 of said plug-in module 2. The second port section 74 has one or more wall box connectors 76 for mating with or contacting the one or more second conductors in the second connector section 96 of the first end connector 91 in a plug-and-socket like manner.

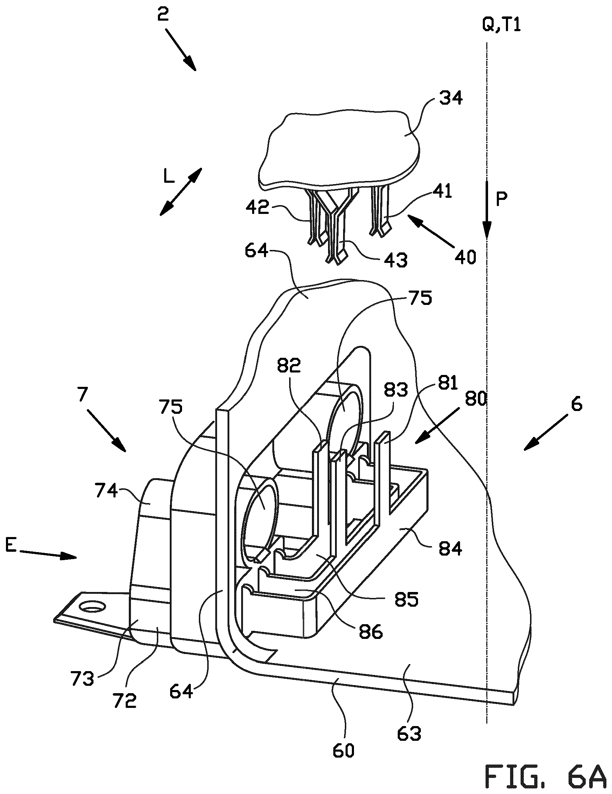

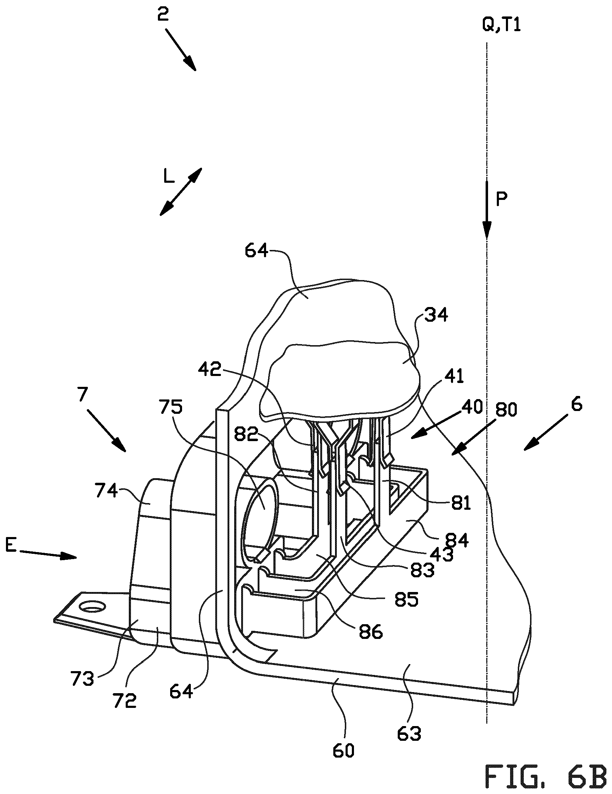

In this exemplary embodiment, the adapter 7 is also an intermediate member or a bridge between the first end connector 91 and the plug-in module 2 in terms of the connection of said plug-in module 2 to the one or more second conductors of the first cable H1. In particular, as shown in figures 6A and 6B, the adapter 7 defines one or more conductive rails or paths 84, 85, 86 for establishing a conductive connection between the one or more second conductors in the connection direction C and the plug-in module 2 in the plug-in direction P. In particular, the one or more conductive paths 84, 85, 86 are connected to or end with a corresponding number of male members 81, 82, 83, for example conductive pins, that together form a plug 80 for a plug-and-socket like connection to the plug-in module 2, which will be described in more detail hereafter.

To prevent accidental contact with the male members 81, 82, 83, a cover 87 may be provided to shield said male members 81, 82, 83 in any other direction than the plug-in direction P.

In this example, the adapter 7 is detachable, removable and/or exchangeable for another adapter with a different configuration, i.e. a different number of fitting ports or a different type of fitting port. Alternatively, the adapter 7 may be integral with or a part of the wall box 6.

The plug-in module 2 is adjustable or movable with respect to the wall box 6 about one or more axes, in particular about a plug-in axis Q parallel or substantially parallel to the plug-in direction P and/or a connection axis D parallel or substantially parallel to the entry direction E and/or the connection direction C. Hence, the position and/or orientation of the plug-in module 2 can be adjusted to match the orientation of the wall into which the wall box 6 is mounted, regardless of the position and/or orientation of the wall box 6 relative to said wall. For example, when the wall box 6 is unparallel, not level, not flush or in any other way misaligned or crooked with respect to the wall, the plug-in module 2 can at least partially compensate for such deviations.

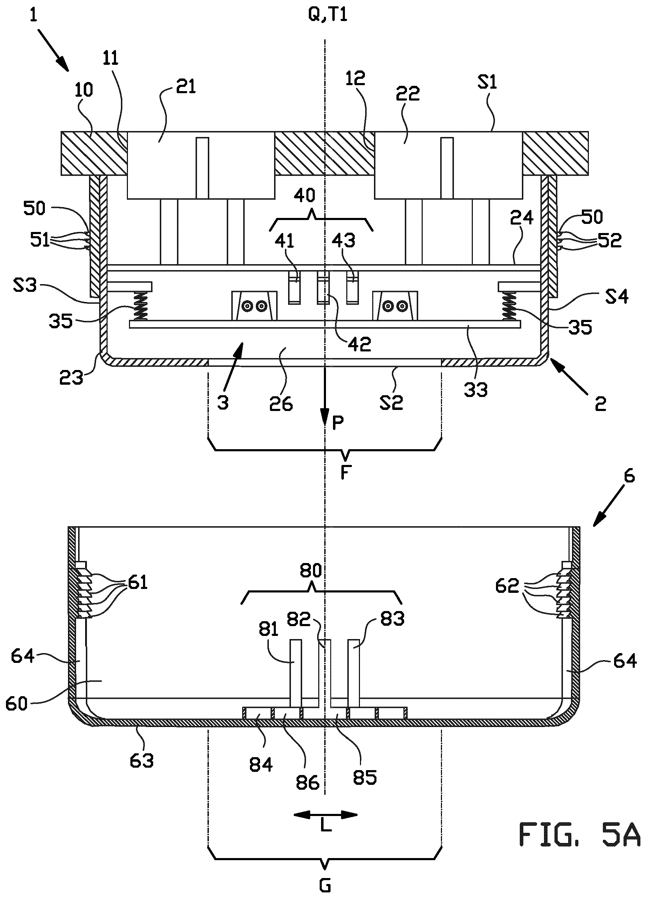

As shown in figure 5A, the plug-in module 2 is provided with one or more first arcuate or convex guides 51 and one or more second arcuate or convex guides 52 on the first lateral side S3 and the second lateral side S4, respectively, of the plug-in body 20. The wall box 6 is provided with one or more first arcuate or concave guides 61 and one or more second arcuate or concave guides 62 directly opposite to the one or more first convex guides 51 and the one or more second convex guides 52 when the plug-in module 2 is plugged into the wall box 6. In this example, the wall box 6 has more first concave guides 61 and second concave guides 62 than the number of first convex guides 51 and second convex guides 52, respectively. A reverse situation is also possible. The convex guides 51, 52 and/or the concave guides 61, 62, when plural, are arranged in an array in which the respective guides 51, 52, 61, 62 are spaced apart, stacked or placed at regular intervals in the plug-in direction P, forming a serrated pattern. As shown in the cross section of figure 5A, each convex guide 51, 52, is formed as an edge, a ridge, a toothed edge or a tooth 50. In particular, each tooth 50 has a wedge surface facing in the plug-in direction P and a stop surface facing in a direction opposite to the plug-in direction P. The concave guides 61, 62 on the wall box 6 have a complementary shape, i.e. a tooth with a wedge surface facing in the direction opposite to the plug-in direction P and a stop surface facing in the plug-in direction P.

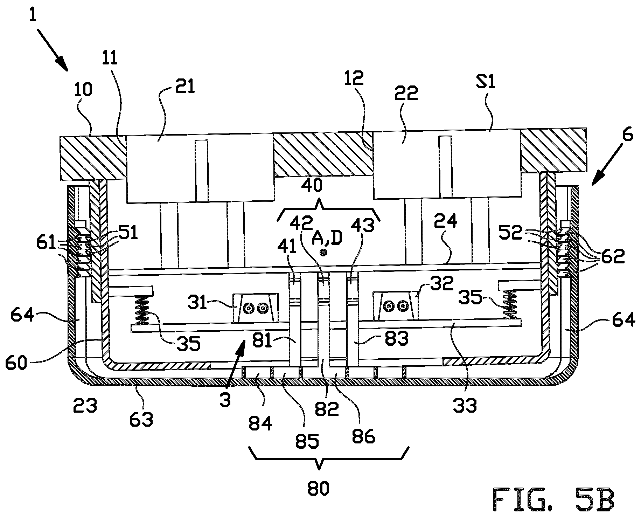

As shown in figure 5B, the tooth-shaped cross sections of the convex guides 51, 52 are configured to slide and/or snap along the respective concave guides 61, 62, facilitated by some flexibility in the circumferential wall 64 of the wall box 6 and/or the circumferential wall 25 of the plug-in body 20, when sufficient pressing force is applied to the plug-in module 2 in the plug-in direction P. The convex guides 51, 52 interlock with the concave guides 61, 62 with the respective stop surfaces facing each other, thereby preventing retraction of the plug-in module 2 from the wall box 6. Hence, the plug-in module 2 can be brought into engagement with the wall box 6 in one-way only in the plug-in direction P. The engagement can be adjusted in stepped or stepwise manner, pushing the plug-in body 20 further into the wall box 6.

The distance over which the plug-in body 20 is plugged into the wall box 6 can be adjusted equally for both lateral sides S3, S4, for example when the wall box 6 is installed flush with or parallel to the wall, or unequally for the lateral sides S3, S4, for example when the wall box 6 is positioned deeper into the wall at one lateral side S3 with respect to the other lateral side S4. When the distance is adjusted unequally, as shown in figure 5B, the plug-in module 2 is effectively rotated or tilted about the connection axis D or an adjustment axis A parallel to said connection axis D.

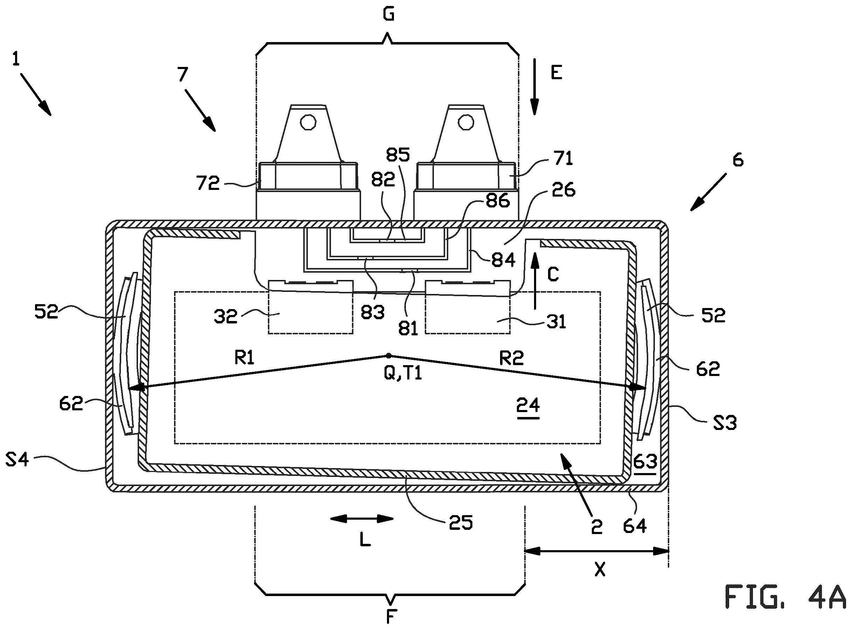

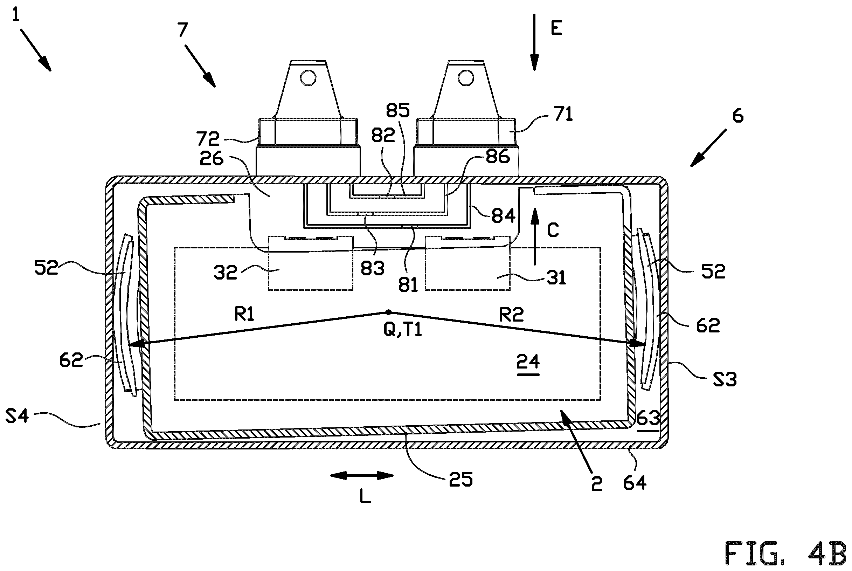

As shown in figures 4A and 4B, the one or more first convex guides 51 and the one or more second convex guides 52 are concentric to a tilt axis T1 parallel to the plug-in direction P. The tilt axis T1 is the same for or common to both the one or more first convex guides 51 and the one or more second convex guides 52. Moreover, the concave guides 61, 62 of the wall box 6 are also concentric to the same tilt axis T1 when the plug-in module 2 is plugged into the wall box 6. The convex guides 51, 52 can slide relative to the concave guides 61, 62 about said tilt axis T1. Hence, the plug-in module 2 can be rotated, pivoted or tilted about the tilt axis T1 to adjust the orientation of the plug-in module 2 relative to the wall box 6 about said tilt axis T1. In particular, the orientation of the plug-in module 2 can be levelled or made horizontal when the wall box is not level or not horizontal.

In this exemplary embodiment, the one or more first convex guides 51 and the one or more second convex guides 52 have the same radius R1, R2 to the tilt axis T1. More in particular, the one or more first convex guides 51 and the one or more second convex guides 52 are symmetrical with respect to the tilt axis T1. In other words, the tilt axis T1 is arranged at a center between the first lateral side S3 and the second lateral side S4. The connection area F of the plug-in body 20 and the adapter position G of the wall box 6 are preferably located in the connection direction C in-line with the tilt axis T1 to minimize the effect of a tilt of the plug-in module 2 about the tilt axis T1 on the ability of said plug-in module 2 to connect to the first end connector 91.

The coupling mechanism 3 will now be described in more detail with reference to figures 1, 2 and 3A-3D.

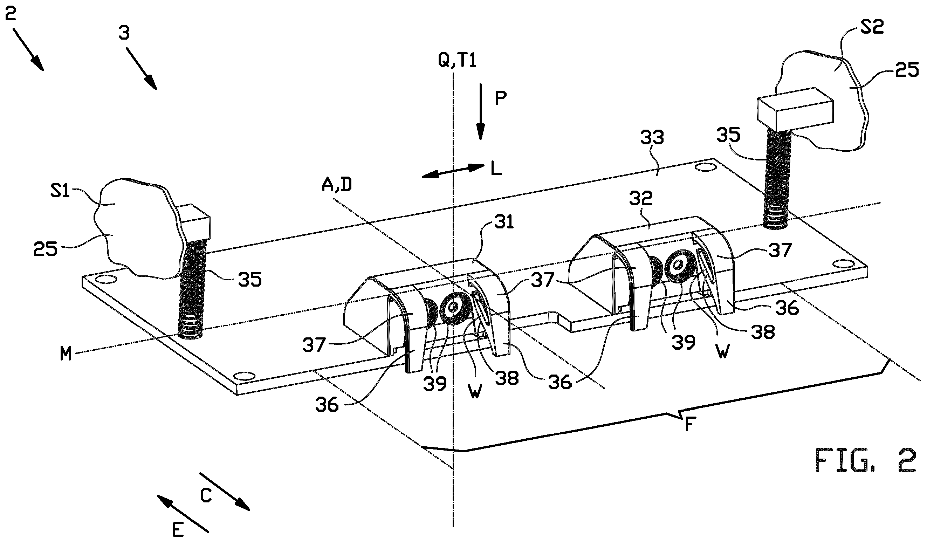

As shown in figure 2, the coupling mechanism 3 comprises a first locating member 31 that is movable with respect to the plug-in body 20 to self-align with the first end connector 91. The coupling mechanism 3 optionally comprises a second locating member 32 that is spaced apart from the first locating member 32 and that is also movable with respect to the plug-in body 20 to self-align with the second end connector 92. In particular, the second locating member 32 is movable together or in unison with the first locating member 31.

In this example, the coupling mechanism 3 comprises a holder 30 for holding the first locating member 31, and optionally the second locating member 32, relative to the plug-in body 20. The holder 30 is movable with respect to the plug-in body 20. In this example, the holder 30 comprises a first printed circuit board 33 that holds the first locating member 31 and optionally the second locating member 32. In addition to holding the first locating member 31, the first printed circuit board 33 may also be electronically or optically connected to said first locating member 31 to process the signals received by said first locating member 31, once connected to the first end connector 31. The holder 30 further comprises one or more flexible members 35 for providing freedom of movement to the first printed circuit board 33 relative to the plug-in body 20. The one or more flexible members 35 may for example be springs or other suitable elastic or resilient elements that are strategically positioned between the plug-in body 20 and the first printed circuit board 33 to provide the freedom of movement.

Note that the plug-in module 2 in this example comprises a second printed circuit board 34 that is fixed relative to the plug-in body 20. In particular, said second printed circuit board 34 is associated with the outlets 21, 22 of the plug-in module 2 at the front side S1 thereof. The second printed circuit board 34 may be configured for controlling the electrical power transmitted through the plug-in body 2. The aforementioned holder 30, in this example in the form of the first printed circuit board 31, is arranged below the second printed circuit board 34 in the plug-in direction P. In the position below the second printed circuit board 34, the holder 30 can be positioned closer to the first end connector 91 when plugging the plug-in module 2 into the wall box 6, thereby establishing the connection in a way that does not interfere with the operation of the second printed circuit board 34.

Alternatively, the first printed circuit board 33 is a flexible printed circuit board, thereby eliminating the need for separate flexible members. In yet another alternative embodiment, the first locating member 31 may be suspended directly from the plug-in body 20 via the one or more flexible members, without the need for an intermediate holding member such as the first printed circuit board. In a further alternative embodiment, the first locating member 31 and/or the holder 30 may be suspended from the second printed circuit board 34 instead of the plug-in body 20.

The first locating member 31 is movable with respect to the plug-in body 20 in one or more directions of the plug-in direction P, the connection direction C and the lateral direction L or about one or more axes of the plug-in axis Q, the connection axis D and a lateral axis M parallel to a lateral direction L. The aforementioned freedom of movement enables the first locating member 31 to locate and subsequently center or align itself relative to the first end connector 91.

The operation of the first locating member 31 and the optional second locating member 32 will be described hereafter with reference to the first locating member 31 and the first end connector 91 only. However, the same principle can be applied *mutatis mutandis* to the second locating member 32 and the second end connector 92.

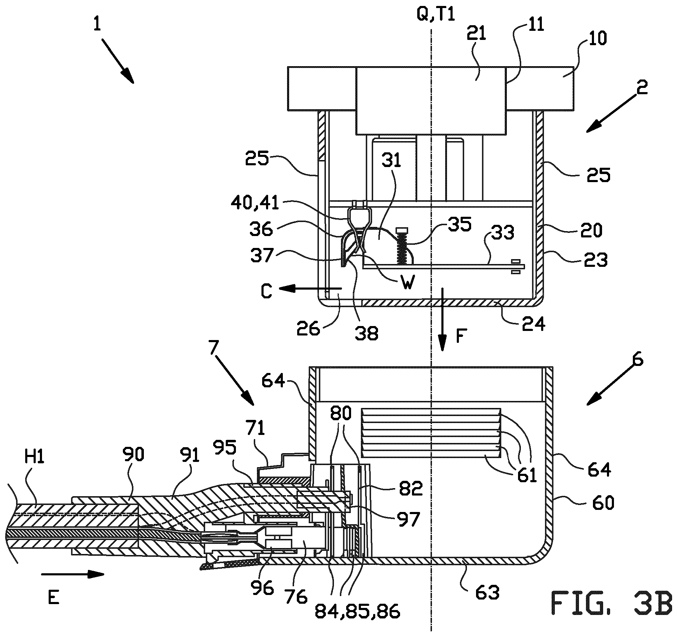

As best seen in figure 2, the first locating member 31 comprises one or more hooks 36 for hooking over the flange 97 of the first end connector 91 in the plug-in direction P. In this example, the first locating member 31 comprises two hooks 36 spaced apart in the lateral direction L. The spacing between the hooks 36 in the lateral direction L is sufficient to allow for hooking over the flange 97 of the first end connector 91 when the first end connector 91 is fitted to the first fitting port 71 of the adapter 7, as shown in figure 3B, even when said first end connector 91 is not exactly aligned with the first locating member 31 in the plug-in direction P. In particular, the two hooks 36 taper towards each other slightly in a direction opposite to the plug-in direction P such that, when the first end connector 91 is received in between the two hooks 36, the tapering surfaces will urge the first locating member 31 to self-align with respect the first end connector 91 within the freedom of movement of said first end connector 91 in the lateral direction L.

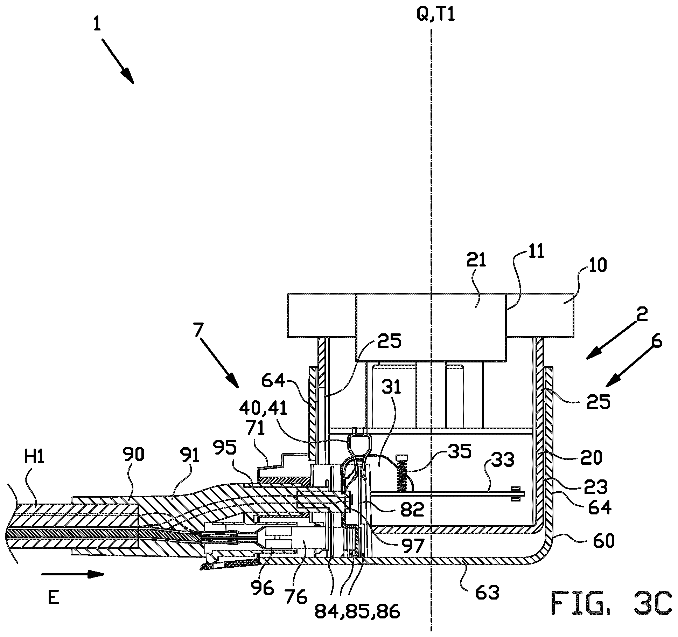

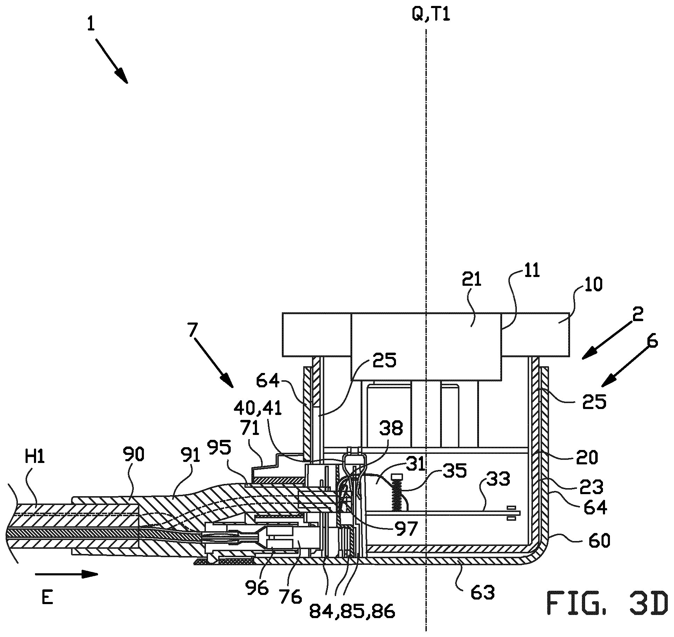

As further shown in figure 3B, each hook 36 of the one or more hooks 36 defines an internal wedge surface W that is arranged at an oblique angle to the plug-in direction P, the entry direction E and/or the connection direction C. In this exemplary embodiment, each hook 36 of the one or more hooks 36 comprises a hook-shaped body 37 and a flexible or resilient finger 38 extending inside said hook-shaped body 37 to define the internal wedge surface W. As shown in figures 3C and 3D, the internal wedge surface W is dimensioned and/or shaped to convert the relative movement between the first locating member 31 and the first end connector 91 in the plug-in direction P into a tightening, clamping or pull-in movement exerted by said internal wedge surface W onto the flange 97 in the entry direction E, thereby conversely moving the first locating member 31 relative to and/or closer to the first end connector 91 in the connection direction C. In other words, the first locating member 31 can progressively pull in the first end connector 91, in particular at the flange 97 thereof, in the entry direction E parallel to the connection direction C, in response to the plug-in body 20 being plugged into the wall box 6 in the plug-in direction P.

As best seen in figure 2, the first locating member 31 comprises one or more connectors 39, in this case optical connectors, for connecting to the one or more first conductors in the first connector section 95 of the first end connector 91. In this example, the one or more connectors 39 comprise lenses for optically connecting to the one or more first conductors. For the lenses to operate properly, the one or more connectors 39 are preferably configured for receiving from and transmitting to the one or more first conductors by being directly opposite to and/or aligned with said one or more first conductors. The one or more connectors 39 may be positioned relative to the body of the first locating member 31 in such a way that a small spacing or air gap remains between the one or more connectors 39 and the one or more first conductors. Alternatively, the one or more connectors 39 are configured for abutting contact with said one or more first conductors.

The pull-in, wedge or clamp action of the first locating member 31 allows for the coupling mechanism 3 to self-connect to the first end connector 91 in the connection direction C in response to plugging the plug-in module 2 into the wall box 6 in the plug-in direction P.

Depending on how far the first end connector 91 has been inserted into the wall box 7, the first locating member 31 can pull the first end connector 91 further into the wall box 7 in the entry direction E by its flange 97. This has the additional advantage that, in this particular example, the second connector section 96 is pulled tighter into the first fitting port 71 of the adapter 7, thereby ensuring a more reliable and/or water-tight fitting. Once the first end connector 91 can not be moved further into the wall box 7, the coupling mechanism 3 may allow for the first locating member 31 to move relative to the wall box 7 to further tighten the connection.

As shown in figures 6A and 6B, the plug-in module 2 is provided with a socket 40 for connecting to the plug 80 of the adapter 7 in the plug-in direction P in a plug-and-socket like manner. In this exemplary embodiment, the socket 40 is connected to the second printed circuit board 34 to process the signals or power received through said socket 40 directly on said second printed circuit board. The socket 40 has a number of conductive contacts, in particular electrically conductive contacts, for contacting the conductive paths 84, 85, 86 of the adapter 7 in the plug-in direction P. In this example, the contacts are provided in the form of a number of female members 41, 42, 43 equal to the number of male member 81, 82, 83 at the adapter 7. The female members 41, 42, 43 may be formed as clamps that can surround the three male members 81, 82, 83 that form the plug 80. The plug 80 and socket 40 are substantially aligned in the plug-in direction P when the plug-in module 2 is being plugged in, with some tolerance, tapering, centering features and/or flexibility in the plug 80 and/or the socket 40 to correct for small misalignments between the plug-in body 2 and the wall box 6.

In particular, the plug 80 and/or the socket 40 are dimensioned to establish a reliable connection even if the plug-in module 2 is misaligned with the wall box 6 within a tolerance of up to three degrees about the plug-in axis Q or the connection axis D, and/or a tolerance of up to five millimeters in the plug-in direction P and/or up to three millimeters in the lateral direction L.

It will be understood that the male members may alternatively be provided at the plug-in module 2 and the female members may be provided at the adapter 7.

A method for connecting the aforementioned plug-in module 2 to the first end connector 91 of the first cable 9 will now be briefly elucidated with reference to figure 2, 3A-3D, 4A, 4B, 5A, 5B, 6A and 6B.

Figure 3A shows the situation in which the plug-in module 2 is not yet plugged into the wall box 6. The first end connector 91 is also shown in a position outside of and spaced apart from the wall box 6 for the purpose of showing how the first end connector 91 is fitted to said wall box 6. In practice however, the first end connector 91 is typically already fitted to the wall box 6 prior to casting the wall box 6 into the wall, or shortly thereafter, whereas the plug-in module 2 may be installed or replaced much later by an end-user.

Figure 3B shows the situation in which the first end connector 91 is fitted to the adapter 7 of the wall box 6 with the first connector section 95 protruding at least partially through the adapter 7 into the internal space defined by said wall box 6.

Figure 3C shows the situation in which the plug-in body 20 is partially plugged into the wall box 6 in the plug-in direction P up to a distance or depth at which the first locating member 31 has located the flange 97 of the first end connector 91 and has started to align itself with respect to said first end connector 91.

Figure 3D shows the situation in which the plug-in body 20 is plugged in further in the plug-in direction P, thereby causing the first locating member 31 to pull the first end connector 91 in at its flange 97 until the first locating member 31 has connected itself to the one or more first conductors in the first end connector 91.

As mentioned before, the method more specifically relates to self-aligning with and self-connecting to a first end connector 91 of a hybrid cable, more in particular a hybrid cable having one or more first conductors of the optical type and one or more second conductors of the electrical type. The plug-in module 2 is connected directly to the one or more conductors of the optical type and indirectly, i.e. via the adapter 7, to the one or more conductors of the electrical type.

During the plugging in of the plug-in module 2, the plug-in module 2 can be tilted relative to the wall box 6 about the tilt axis T1 as previously described and disclosed in figures 5A and 5B. Moreover, the depth or distance over which the plug-in module 2 is plugged into the wall box 6 in the plug-in direction P can be adjusted about the adjustment axis A parallel to the connection direction C, as previously described and shown in figures 6A and 6B.

It is noted that one or more fixation means, such as fasteners, bolts or screws, may be used to provide additional fixation of the plug-in module 2 relative to the wall box 6 once the plug-in module 2 has been properly positioned. This may for example be useful when the plug-in module 2 is mounted vertically in a ceiling and/or when the plug-in module 2 is used as a mounting point for a heavy object, such as a lamp.

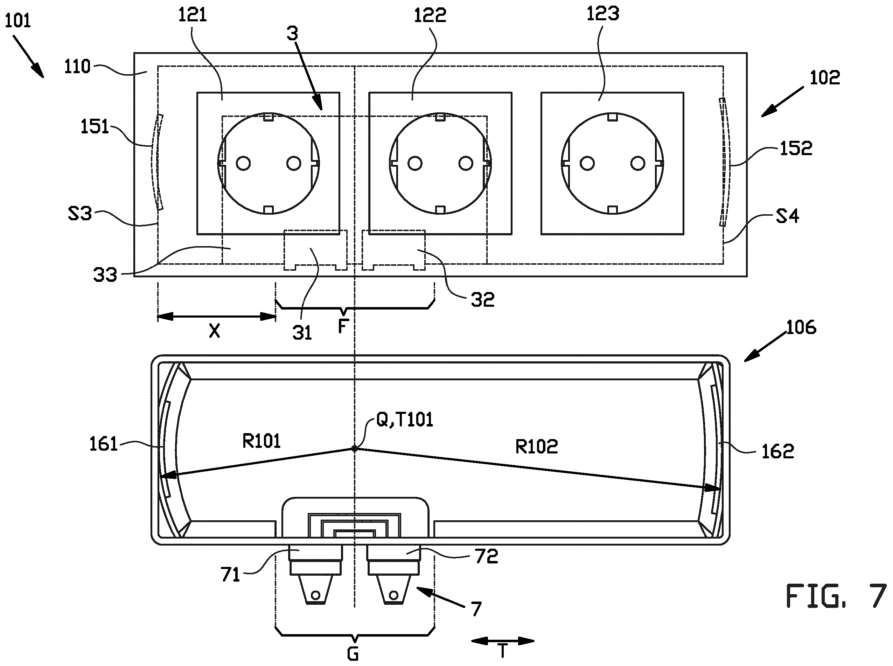

Figure 7 shows an alternative set 101 comprising an alternative plug-in module 102 and an alternative wall box 106 according to a second exemplary embodiment of the invention.

The alternative set 101 differs from the previously described set 1 in that the alternative plug-in module 102 has three outlet units or outlet sections 121, 122, 123 arranged side-by-side between the first lateral side S3 and the second lateral side S4, and the optional matching alternative front panel 110. Each outlet section 121, 122, 123 is provided with one or more ports or a communication unit for connection to external appliances. The alternative wall box 106 has been modified with respect to the previously discussed wall box 6 to be able to receive the alternative plug-in module 102.

The alternative set 101 further differs from the previously described set 1 in that the tilt axis T101 is arranged off-center relative to a center between the first lateral side S3 and the second lateral side S3. In particular, the tilt axis T101 is located in the lateral direction L between the first lateral side S3 and a center between a pair of outlet sections 121, 122 of the three outlet sections 121, 122 adjacent to said first lateral side S3.

Note that the one or more first convex guides 151 are arranged at a first radius R101 to the tilt axis T101 and the one or more second convex guides 152 are arranged at a second radius R102 to the tilt axis T102, different from the first radius R101. In this example, the second radius R102 is at least one-and-half times the first radius R101, and preferably at least two times the first radius R101. In other words, the one or more first convex guides 151 are asymmetrical to the one or more second convex guides 152 with respect to the tilt axis T102. Because the convex guides 151, 152, despite their asymmetry are still concentric to the same off-center tilt axis T102, the alternative plug-in module 102 can be rotated or tilted about said tilt axis T102.

Conveniently, the alternative plug-in module 102 is configured, adapted or arranged for connecting to the first end connector 91 in a connection area F that is off-center relative to a center between the first lateral side S3 and the second lateral side S4 in the same direction as the off-center tilt axis T101. Accordingly, the adapter 7 is provided at an adapter position G that is also off-center in the same direction. In particular, the connection area F and/or the adapter position G are located in the lateral direction L between the first lateral side S3 and a center between the pair of outlet sections 121, 122 of the three outlet sections 121, 122, 123 adjacent to the first lateral side S3. In other words, the connection area F and/or the adapter position G are aligned with the off-center tilt axis T101 in the connection direction C and/or the entry direction E.

By keeping the connection area F and/or the adapter position G off-center, said connection area F and/or said adapter position G may remain in substantially the same position relative to the first lateral side S3 regardless of the additional outlet section 123 compared to the connection area F of the plug-in module 2 of figure 1 with only two outlet sections 21, 22. In particular, the connection area F can remain at a connection area distance X to said first lateral side S3. More in particular, a whole range of alternative plug-in modules and/or wall boxes may be provided with three or more outlet sections, each having the connection area F and/or the adapter position G off-center and/or in the same position relative to the first lateral side S3 as in figure 1.

Finally, because of the off-center position of the connection area F, said connection area F is located as close as possible to or at the position of the tilt axis T101 where the influence of the tilt or rotation of the alternative plug-in module 102 about the tilt axis T101 on the angular displacement of the alternative plug-in module 102 with respect to the alternative wall box 106 at the connection area F is minimal. This improves the chances of the alternative plug-in module 102 being able to self-align and self-connect to the first end connector 91.

It is to be understood that the above description is included to illustrate the operation of the preferred embodiments and is not meant to limit the scope of the invention.

### LIST OF REFERENCE NUMERALS

- 1: set
- 10: front panel
- 11: first panel section
- 12: second panel section
- 2: plug-in module
- 20: plug-in body
- 21: first outlet section
- 22: second outlet section
- 23: housing
- 24: rear wall
- 25: circumferential wall
- 26: connector accommodation aperture
- 3: coupling mechanism
- 30: holder
- 31: first locating member
- 32: second locating member
- 33: first printed circuit board
- 34: second printed circuit board
- 35: flexible member
- 36: hook
- 37: hook-shaped body
- 38: resilient finger
- 39: optical connector
- 40: socket
- 41: first female member
- 42: second female member
- 43: third female member
- 50: tooth
- 51: first convex guide
- 52: second convex guide
- 6: wall box
- 60: wall box body
- 61: first concave guide
- 62: second concave guide
- 63: rear wall
- 64: circumferential wall
- 65: adapter opening
- 7: adapter
- 70: adapter body
- 71: first fitting port
- 72: second fitting port
- 73: first port section
- 74: second port section
- 75: through opening
- 76: wall box connector
- 80: plug
- 81: first male member
- 82: second male member
- 83: third male member
- 84: first conductive path
- 85: second conductive path
- 86: third conductive path
- 87: cover
- 90: end connector body
- 91: first end connector
- 92: second end connector
- 93: first conductor
- 94: second conductor
- 95: first connector section
- 96: second connector section
- 97: flange
- 101: alternative set
- 110: alternative front panel
- 102: alternative plug-in module
- 121: first outlet section
- 122: second outlet section
- 123: third outlet section
- 151: first convex guide
- 152: second convex guide
- 106: alternative wall box
- 161: first concave guide
- 162: second concave guide

- A: adjustment axis
- C: connection direction
- D: connection axis
- E: entry direction
- F: connection area
- G: adapter position
- H1: first cable
- H2: second cable
- L: lateral direction
- M: lateral axis
- P: plug-in direction
- Q: plug-in axis
- R1: first radius
- R2: second radius
- R101: first radius
- R102: second radius
- S1: front side
- S2: rear side
- S3: first lateral side
- S4: second lateral side
- T1: tilt axis
- T101: tilt axis
- X: connection area distance
- W: wedge surface

## Claims

1. Plug-in module (2, 102) for connecting to a first end connector (91) of a first cable (H1) within a wall box (6, 106), wherein the plug-in module (2, 102) comprises a front side (S1) for receiving a front panel (10, 110), a rear side (S2) opposite to the front side (S1) and a plug-in body (20) extending in a plug-in direction (P) from the front side (S1) towards the rear side (S2) for plugging into the wall box (6, 106) in said plug-in direction (P), **characterized in that** the plug-in module (2, 102) further comprises a coupling mechanism (3) that is arranged for self-aligning with the first end connector (91) and for self-connecting to the first end connector (91) in a connection direction (C) transverse or perpendicular to the plug-in direction (P) in response to plugging the plug-in body (20) into the wall box (6, 106) in the plug-in direction (P).

2. Plug-in module (2, 102) according to claim 1, wherein the coupling mechanism (3) comprises a first locating member (31) that is movable with respect to the plug-in body (20) to self-align with the first end connector (91),
preferably wherein the first locating member (31) is movable with respect to the plug-in body (20) in one or more directions of the plug-in direction (P), the connection direction (C) and a lateral direction (L) transverse to the connection direction (C) and the plug-in direction (P); and/or
wherein the first locating member (31) is movable with respect to the plug-in body (20) about one or more axes of a plug-in axis (Q) parallel to the plug-in direction (P), a connection axis (D) parallel to the connection direction (C) and a lateral axis (M) parallel to a lateral direction (L) transverse to the connection direction (C) and the plug-in direction (P).

3. Plug-in module (2, 102) according to claim 2, wherein the coupling mechanism (3) comprises a holder (30) for holding the first locating member (31) relative to the plug-in body (20),
preferably wherein the holder (30) comprises one or more flexible members (35) for providing freedom of movement to the first locating member (31) relative to the plug-in body (20).

4. Plug-in module (2, 102) according to claim 3, wherein the holder (30) comprises a first printed circuit board (33),
preferably wherein the first printed circuit board (33) is flexible.

5. Plug-in module (2, 102) according to claim 3 or 4, wherein the plug-in module (2, 102) comprises a second printed circuit board (34) that is fixed relative to the plug-in body (20), wherein the holder (30) is arranged below the second printed circuit board (34) in the plug-in direction (P).

6. Plug-in module (2, 102) according to any one of claims 2-5, wherein the first end connector (91) is provided with a flange (97), wherein the first locating member (31) comprises one or more hooks (36) for hooking over said flange (97) in the plug-in direction (P),
preferably wherein each hook (36) of the one or more hooks (36) defines an internal wedge surface (W) that is arranged at an oblique angle to the plug-in direction (P) for progressively pulling in the flange (97) in an entry direction (E) parallel to the connection direction (C) when plugging the plug-in body (20) into the wall box (6, 106) in the plug-in direction (P),
more preferably wherein each hook (36) of the one or more hooks (36) comprises a hook-shaped body (37) and a resilient finger (38) extending inside said hook-shaped body (37) to define the internal wedge surface (W).

7. Plug-in module (2, 102) according to any one of claims 2-6, wherein the coupling mechanism (3) comprises a second locating member (32) spaced apart from the first locating member (31) and movable with respect to the plug-in body (20) to self-align with and self-connect to a second end connector (92) of a second cable (H2),
preferably wherein the second locating member (32) is movable in unison with the first locating member (31).

8. Plug-in module (2, 102) according to any one of the preceding claims, wherein the plug-in body (20) comprises a housing (23) having a rear wall (24) that defines the rear side (S2) of the plug-in module (2, 102) and a circumferential wall (25) connected to said rear wall (24), wherein the plug-in module (2, 102) is provided with a connector accommodation aperture (26) extending continuously in both the rear wall (24) and the circumferential wall (25) for accommodating the first end connector (91) at least partially within the housing (23) when the plug-in module (2, 102) is plugged into the wall box (6, 106) in the plug-in direction (P).

9. Plug-in module (2, 102) according to any one of the preceding claims, wherein the first cable (H1) is a hybrid cable having one or more first conductors (93) and one or more second conductors (94) of different type to the one or more first conductors (93), wherein the coupling mechanism (3) is arranged for self-aligning with and self-connecting to the one or more first conductors (93),
preferably wherein the one or more first conductors (93) are optical conductors, preferably optical fibers and more preferably plastic optical fibers, wherein the coupling mechanism (3) comprises one or more optical connectors (39) for connecting to said one or more first conductors (93).

10. Plug-in module (2, 102) according to claim 9, wherein an adapter (7) is provided at the wall box (6, 106) for fitting the first end connector (91) to the wall box (6, 106) in an entry direction (E) parallel to the connection direction (C), wherein the plug-in module (2, 102) comprises one of a plug and a socket (40) for establishing a plug-and-socket connection between the plug-in module (2, 102) and the adapter (7) in the plug-in direction (P),
preferably wherein the adapter (7) defines one or more conductive paths (84, 85, 86) for establishing a conductive connection between the one or more second conductors (94) in the connection direction (C) and said one of the plug and the socket (40) in the plug-in direction (P),
more preferably wherein the one or more second conductors (94) are electrical conductors, wherein said one of the plug and the socket (40) of the plug-in module (2, 102) comprises one or more contacts (41, 42, 43) for electrically contacting said one or more conductive paths (84, 85, 86) in the plug-in direction,
most preferably wherein said one or more contacts (41, 42, 43) are configured for establishing electrical contact even when said one of the plug and the socket (40) of the plug-in module (2, 102) is not fully aligned with said one or more conductive paths (84, 85, 86).

11. Plug-in module (2, 102) according to any one of the preceding claims, wherein the plug-in module (2, 102) is provided with one or more first convex guides (51, 151) and one or more second convex guides (52, 152) on a first lateral side (S3) and a second lateral side (S4), respectively, of the plug-in body (20) in a lateral direction (L) perpendicular to the plug-in direction (P) and the connection direction (C) for engaging with concave guides (61, 62, 161, 162) at the wall box (6, 106).

12. Plug-in module (2, 102) according to claim 11, wherein the one or more first convex guides (51) and the one or more second convex guides (52) are concentric to a tilt axis (T1, T101) parallel to the plug-in direction (P).

13. Plug-in module (2) according to claim 12, wherein the tilt axis (T1) is arranged at a center between the first lateral side (S3) and the second lateral side (S4); or
wherein the one or more first convex guides (51) and the one or more second convex guides (52) have the same radius (R1, R2) to the tilt axis (T1).

14. Plug-in module (102) according to claim 12, wherein the tilt axis (T101) is arranged off-center relative to a center between the first lateral side (S3) and the second lateral side (S4); or
wherein the one or more first convex guides (151) are arranged at a first radius (R101) to the tilt axis (T101) and the one or more second convex guides (152) are arranged at a second radius (R102) to the tilt axis (T101), different from the first radius (R101),
preferably wherein the plug-in module (102) is arranged for connecting to the first end connector (91) in a connection area (F) that is off-center relative to a center between the first lateral side (S3) and the second lateral side (S4) in the same direction as the tilt axis (T101).

15. Plug-in module (2, 102) according to any one of claims 11-14, wherein each convex guide (51, 52, 151, 152) of the one or more first convex guides (51, 151) and the one or more second convex guides (52, 152), in cross section, defines a tooth (50) that is arranged for a stepwise adjustable engagement with the concave guides (61, 62, 161, 162) at the wall box (6, 106),
preferably wherein the tooth (50) is arranged for the stepwise adjustable engagement in one-way only in the plug-in direction (P).

16. Plug-in module (102) according to any one of the preceding claims, wherein the plug-in module (102) comprises at least three outlet sections (121, 122, 123) each having one or more ports or a communication unit for connection to external appliances, wherein the at least three outlet sections (121, 122, 123) are arranged side-by-side between a first lateral side (S3) and a second lateral side (S4) of the plug-in body (102) in a lateral direction (L) perpendicular to the plug-in direction (P) and the connection direction (C), wherein the plug-in module (102) is arranged for connecting to the first end connector (91) in a connection area (F) that is off-center relative to a center between the first lateral side (S3) and the second lateral side (S3),
preferably wherein the connection area (F) is located in the lateral direction (L) between the first lateral side (S3) and a center between a pair of outlet sections (121, 122) of the at least three outlet sections (121, 122, 123) adjacent to the first lateral side (S3).

17. Set (1, 101) of a plug-in module (2, 102) according to any one of the preceding claims and a wall box (6, 106),
preferably wherein the wall box (6, 106) is arranged for receiving the first cable (H1) along a connection axis (D) parallel to the connection direction (C).

18. Set (1, 101) according to claim 17, wherein the set (1, 101) further comprises an adapter (7) provided at the wall box (6, 106) for fitting the first end connector (91) to said wall box (6, 106) in an entry direction (E) parallel to the connection direction (C),
preferably wherein the adapter (7) comprises one or more through holes (75) for passing through at least a part of the first end connector (91) in the entry direction (E) for direct connection to the coupling mechanism (3) of the plug-in module (2, 102).

19. Set (1, 101) according to claim 18, wherein the adapter (7) is removable from the wall box (6, 106).

20. Set (101) according to claim 18 or 19, wherein the adapter (7) is provided at an adapter position (G) that is off-center relative to a center between a first lateral side (S3) and a second lateral side (S4) of the plug-in body (20) in a lateral direction (L) perpendicular to the plug-in direction (P) and the connection direction (C),
preferably wherein the plug-in module (102) comprises at least three outlet sections (121, 122, 123) each having one or more ports or a communication unit for connection to external appliances, wherein the at least three outlet sections (121, 122, 123) are arranged side-by-side between a first lateral side (S3) and a second lateral side (S4) of the plug-in body (20) in the lateral direction (L), wherein the adapter position (G) is located, when the plug-in body (20) is plugged into the wall box (106), in the lateral direction (L) between the first lateral side (S3) and a center between a pair of outlet sections (121, 122) of the at least three outlet sections (121, 122, 123) adjacent to the first lateral side (S3).

21. Method for connecting a plug-in module (2, 102) to a first end connector (91) of a first cable (H1) within a wall box (6, 106) with the use of the set (1, 101) according to any one of claims 17-20, wherein the method comprises the steps of:
- plugging the plug-in body (20) into the wall box (6, 106) in the plug-in direction (P) towards a first end connector (91) extending at least partially into the wall box (6, 106) along a connection axis (D) parallel to the connection direction (C);
- allowing the coupling mechanism (3) to self-align with the first end connector (91) in response to plugging the plug-in body (20) further into the wall box (6, 106) in the plug-in direction (P); and
- allowing the coupling mechanism (3) to self-connect to the first end connector (91) in the connection direction (C) in response to plugging the plug-in body (20) further into the wall box (6, 106) in the plug-in direction (P).

## Patentansprüche

1. Einsteckmodul (2, 102) zum Verbinden mit einem ersten Endverbinder (91) eines ersten Kabels (H1) in einer Wanddose (6, 106), wobei das Einsteckmodul (2, 102) eine Vorderseite (S1) zum Aufnehmen einer Frontplatte (10, 110), eine Rückseite (S2), die der Vorderseite (S1) gegenüberliegt, und einen Einsteckkörper (20) umfasst, der sich in einer Einsteckrichtung (P) von der Vorderseite (S1) zur Rückseite (S2) zum Einstecken in die Wanddose (6, 106) in der Einsteckrichtung (P) erstreckt, **dadurch gekennzeichnet, dass** das Einsteckmodul (2, 102) ferner einen Verbindungsmechanismus (3) umfasst, der zum Selbstausrichten mit dem ersten Endverbinder (91) und zum Selbstverbinden mit dem ersten Endverbinder (91) in einer zur Einsteckrichtung (P) querlaufenden oder perpendikularen Verbindungsrichtung (C) als Reaktion auf das Einstecken des Einsteckkörpers (20) in die Wanddose (6, 106) in der Einsteckrichtung (P) eingerichtet ist.

2. Einsteckmodul (2, 102) nach Anspruch 1, wobei der Verbindungsmechanismus (3) ein erstes Positionierungselement (31) umfasst, das gegenüber dem Einsteckkörper (20) bewegbar ist, um sich selbst mit dem ersten Endverbinder (91) auszurichten,
vorzugsweise wobei das erste Positionierungselement (31) gegenüber dem Einsteckkörper (20) in einer oder mehr Richtungen von der Einsteckrichtung (P), der Verbindungsrichtung (C) und einer seitlichen Richtung (L), die quer zu der Verbindungsrichtung (C) und der Einsteckrichtung (P) verläuft, bewegbar ist; und/oder
wobei das erste Positionierungselement (31) gegenüber dem Einsteckkörper (20) um eine oder mehr Achsen von einer Einsteckachse (Q), die parallel zur Einsteckrichtung (P) ist, einer Verbindungsachse (D), die parallel zur Verbindungsrichtung (C) ist, und einer seitlichen Achse (M), die parallel zu einer seitlichen Richtung (L) ist, die quer zu der Verbindungsrichtung (C) und der Einsteckrichtung (P) verläuft, bewegbar ist.

3. Einsteckmodul (2, 102) nach Anspruch 2, wobei der Verbindungsmechanismus (3) einen Halter (30) zum Halten des ersten Positionierungselements (31) relativ zum Einstecckörper (20) umfasst,
vorzugsweise wobei der Halter (30) ein oder mehr flexible Elemente (35) umfasst, um dem ersten Positionierungselement (31) Bewegungsfreiheit relativ zum Einsteckkörper (20) zu verschaffen.

4. Einsteckmodul (2, 102) nach Anspruch 3,
wobei der Halter (30) eine erste Leiterplatte (33) umfasst,
vorzugsweise wobei die erste Leiterplatte (33) flexibel ist.

5. Einsteckmodul (2, 102) nach Anspruch 3 oder 4, wobei das Einsteckmodul (2, 102) eine zweite Leiterplatte (34) umfasst, die relativ zum Einsteckkörper (20) fixiert ist, wobei der Halter (30) unterhalb der zweiten Leiterplatte (34) in der Einsteckrichtung (P) angeordnet ist.

6. Einsteckmodul (2, 102) nach einem der Ansprüche 2 bis 5, wobei der erste Endverbinder (91) mit einem Flansch (97) versehen ist, wobei das erste Positionierungselement (31) einen oder mehr Haken (36) zum Einhaken über dem Flansch (97) in der Einsteckrichtung (P) umfasst,
vorzugsweise wobei jeder Haken (36) des einen oder der mehreren Haken (36) eine innere Keilfläche (W) definiert, die in einem schiefen Winkel zur Einsteckrichtung (P) angeordnet ist, um den Flansch (97) in einer Eintrittsrichtung (E), die parallel zur Verbindungsrichtung (C) ist, fortschreitend hineinzuziehen, wenn der Einsteckkörper (20) in der Einsteckrichtung (P) in die Wanddose (6, 106) gesteckt wird,
noch bevorzugter wobei jeder Haken (36) des einen oder der mehreren Haken (36) einen hakenförmigen Körper (37) und einen nachgiebigen Finger (38), der sich in den hakenförmigen Körper (37) erstreckt, um die innere Keilfläche (W) zu definieren, umfasst.

7. Einsteckmodul (2, 102) nach einem der Ansprüche 2 bis 6, wobei der Verbindungsmechanismus (3) ein zweites Positionierungselement (32) umfasst, das von dem ersten Positionierungselement (31) beabstandet und gegenüber dem Einsteckkörper (20) bewegbar ist, um sich selbst mit einem zweiten Endverbinder (92) eines zweiten Kabels (H2) auszurichten und zu verbinden,
vorzugsweise wobei das zweite Positionierungselement (32) gemeinsam mit dem ersten Positionierungselement (31) bewegbar ist.

8. Einsteckmodul (2, 102) nach einem der vorhergehenden Ansprüche, wobei der Einsteckkörper (20) ein Gehäuse (23) umfasst, das eine Rückwand (24), die eine Rückseite (S2) des Einsteckmoduls (2, 102) definiert, und eine Umfangswand (25) umfasst, die mit der Rückwand (24) verbunden ist, wobei das Einsteckmodul (2, 102) mit einer Verbinderaufnahmeöffnung (26) versehen ist, die sich kontinuierlich in sowohl die Rückwand (24) als auch die Umfangswand (25) erstreckt, um den ersten Endverbinder (91) zumindest teilweise im Gehäuse (23) aufzunehmen, wenn das Einsteckmodul (2, 102) in der Einsteckrichtung (P) in die Wanddose (6, 106) gesteckt wird.

9. Einsteckmodul (2, 102) nach einem der vorhergehenden Ansprüche, wobei das erste Kabel (H1) ein Hybridkabel ist, das einen oder mehr erste Leiter (93) und einen oder mehr zweite Leiter (94) von anderer Art als der eine oder die mehreren ersten Leiter (93) aufweist, wobei der Verbindungsmechanismus (3) zum Selbstausrichten und Selbstverbinden mit dem einen oder den mehreren ersten Leitern (93) eingerichtet ist,
vorzugsweise wobei der eine oder die mehreren ersten Leiter (93) optische Leiter, vorzugsweise Lichtwellenleiter und noch bevorzugter Kunststoff-Lichtwellenleiter sind, wobei der Verbindungsmechanismus (3) einen oder mehr optische Steckverbinder (39) zum Verbinden mit dem einen oder den mehreren ersten Leitern (93) umfasst.

10. Einsteckmodul (2, 102) nach Anspruch 9, wobei ein Adapter (7) an der Wanddose (6, 106) zum Anbringen des ersten Endverbinders (91) an der Wanddose (6, 106) in einer zur Verbindungsrichtung (C) parallelen Eintrittsrichtung (E) vorgesehen ist, wobei das Einsteckmodul (2, 102) eines von einem Stecker und einer Buchse (40) zum Herstellen einer Steckverbindung zwischen dem Einsteckmodul (2, 102) und dem Adapter (7) in der Einsteckrichtung (P) umfasst,
vorzugsweise wobei der Adapter (7) eine oder mehr Leiterbahnen (84, 85, 86) zum Herstellen einer leitenden Verbindung zwischen dem einen oder den mehreren zweiten Leitern (94) in der Verbindungsrichtung (C) und dem einen von dem Stecker und der Buchse (40) in der Einsteckrichtung (P) definiert,
noch bevorzugter wobei der eine oder die mehreren zweiten Leiter (94) elektrische Leiter sind, wobei das eine von dem Stecker und der Buchse (40) des Einsteckmoduls (2, 102) einen oder mehr Kontakte (41, 42, 43) zum elektrischen Kontaktieren der einen oder der mehreren Leiterbahnen (84, 85, 86) in der Einsteckrichtung umfasst,
am meisten bevorzugt wobei der eine oder die mehreren Kontakte (41, 42, 43) dazu ausgestaltet sind, einen elektrischen Kontakt auch dann herzustellen, wenn das eine von dem Stecker und der Buchse (40) des Einsteckmoduls (2, 102) nicht vollständig mit der einen oder den mehreren Leiterbahnen (84, 85, 86) ausgerichtet ist.

11. Einsteckmodul (2, 102) nach einem der vorhergehenden Ansprüche, wobei das Einsteckmodul (2, 102) mit einer oder mehr ersten konvexen Führungen (51, 151) und einer oder mehr zweiten konvexen Führungen (52, 152) auf einer ersten lateralen Seite (S3) beziehungsweise einer zweiten lateralen Seite (S4) des Einsteckkörpers (20) in einer seitlichen Richtung (L), die perpendikular zu der Einsteckrichtung (P) und der Verbindungsrichtung (C) ist, für den Eingriff mit konkaven Führungen (61, 62, 161, 162) an der Wanddose (6, 106) versehen ist.

12. Einsteckmodul (2, 102) nach Anspruch 11, wobei die eine oder die mehreren ersten konvexen Führungen (51) und die eine oder die mehreren zweiten konvexen Führungen (52) konzentrisch zu einer geneigten Achse (T1, T101) sind, die parallel zur Einsteckrichtung (P) ist.

13. Einsteckmodul (2) nach Anspruch 12, wobei die geneigte Achse (T1) in einer Mitte zwischen der ersten lateralen Seite (S3) und der zweiten lateralen Seite (S4) angeordnet ist; oder
wobei die eine oder die mehreren ersten konvexen Führungen (51) und die eine oder die mehreren zweiten konvexen Führungen (52) den gleichen Radius (R1, R2) zur geneigten Achse (T1) aufweisen.

14. Einsteckmodul (102) nach Anspruch 12, wobei die geneigte Achse (T101) außermittig relativ zu einer Mitte zwischen der ersten lateralen Seite (S3) und der zweiten lateralen Seite (S4) angeordnet ist; oder
wobei die eine oder die mehreren ersten konvexen Führungen (151) in einem ersten Radius (R101) zur geneigten Achse (T101) angeordnet sind und die eine oder die mehreren zweiten konvexen Führungen (152) in einem vom ersten Radius (R101) verschiedenen zweiten Radius (R102) zur geneigten Achse (T101) angeordnet sind,
vorzugsweise wobei das Einsteckmodul (102) zum Verbinden mit dem ersten Endverbinder (91) in einem Verbindungsbereich (F) eingerichtet ist, der relativ zu einer Mitte zwischen der ersten lateralen Seite (S3) und der zweiten lateralen Seite (S4) in derselben Richtung wie die geneigte Achse (T101) außermittig ist.

15. Einsteckmodul (2, 102) nach einem der Ansprüche 11 bis 14, wobei jede konvexe Führung (51, 52, 151, 152) der einen oder der mehreren ersten konvexen Führungen (51, 151) und der einen oder der mehreren zweiten konvexen Führungen (52, 152) im Querschnitt einen Zahn (50) definiert, der für einen schrittweisen anpassbaren Eingriff mit den konkaven Führungen (61, 62, 161, 162) an der Wanddose (6, 106) eingerichtet ist,
vorzugsweise wobei der Zahn (50) für den schrittweisen anpassbaren Eingriff in nur einer Richtung in der Einsteckrichtung (P) eingerichtet ist.

16. Einsteckmodul (102) nach einem der vorhergehenden Ansprüche, wobei das Einsteckmodul (102) mindestens drei Ausgangsabschnitte (121, 122, 123) umfasst, die jeweils einen oder mehr Anschlüsse oder eine Kommunikationseinheit zum Verbinden mit externen Geräten aufweisen, wobei die mindestens drei Ausgangsabschnitte (121, 122, 123) nebeneinander zwischen einer ersten lateralen Seite (S3) und einer zweiten lateralen Seite (S4) des Einsteckkörpers (102) in einer seitlichen Richtung (L), die perpendikular zu der Einsteckrichtung (P) und der Verbindungsrichtung (C) ist, angeordnet sind, wobei das Einsteckmodul (102) zum Verbinden mit dem ersten Endverbinder (91) in einem Verbindungsbereich (F) eingerichtet ist, der relativ zu einer Mitte zwischen der ersten lateralen Seite (S3) und der zweiten lateralen Seite (S3) außermittig ist,
vorzugsweise wobei sich der Verbindungsbereich (F) in der seitlichen Richtung (L) zwischen der ersten lateralen Seite (S3) und einer Mitte zwischen einem an die erste laterale Seite (S3) angrenzenden Paar von Ausgangsabschnitten (121, 122) der mindestens drei Ausgangsabschnitte (121, 122, 123) befindet.

17. Satz (1, 101) aus einem Einsteckmodul (2, 102) nach einem der vorhergehenden Ansprüche und einer Wanddose (6, 106),
vorzugsweise wobei die Wanddose (6, 106) zum Aufnehmen des ersten Kabels (H1) entlang einer zur Verbindungsrichtung (C) parallelen Verbindungsachse (D) eingerichtet ist.

18. Satz (1, 101) nach Anspruch 17, wobei der Satz (1, 101) ferner einen Adapter (7) umfasst, der zum Anbringen des ersten Endverbinders (91) an der Wanddose (6, 106) in einer zur Verbindungsrichtung (C) parallelen Eintrittsrichtung (E) an der Wanddose (6, 106) vorgesehen ist,
vorzugsweise wobei der Adapter (7) ein oder mehr Durchgangslöcher (75) zum Durchführen zumindest eines Teils des ersten Endverbinders (91) in der Eintrittsrichtung (E) für eine direkte Verbindung mit dem Verbindungsmechanismus (3) des Einsteckmoduls (2, 102) umfasst.

19. Satz (1, 101) nach Anspruch 18, wobei der Adapter (7) von der Wanddose (6, 106) gelöst werden kann.

20. Satz (101) nach Anspruch 18 oder 19,
wobei der Adapter (7) an einer Adapterposition (G) vorgesehen ist, die relativ zu einer Mitte zwischen einer ersten lateralen Seite (S3) und einer zweiten lateralen Seite (S4) des Einsteckkörpers (20) in einer seitlichen Richtung (L), die perpendikular zu der Einsteckrichtung (P) und der Verbindungsrichtung (C) ist, außermittig ist,
vorzugsweise wobei das Einsteckmodul (102) mindestens drei Ausgangsabschnitte (121, 122, 123) umfasst, die jeweils einen oder mehr Anschlüsse oder eine Kommunikationseinheit zum Verbinden mit externen Geräten aufweisen, wobei die mindestens drei Ausgangsabschnitte (121, 122, 123) nebeneinander zwischen einer ersten lateralen Seite (S3) und einer zweiten lateralen Seite (S4) des Einsteckkörpers (20) in der seitlichen Richtung (L) angeordnet sind, wobei sich die Adapterposition (G), wenn der Einsteckkörper (20) in die Wanddose (106) eingesteckt ist, in der seitlichen Richtung (L) zwischen der ersten lateralen Seite (S3) und einer Mitte zwischen einem an die erste laterale Seite (S3) angrenzenden Paar von Ausgangsabschnitten (121, 122) der mindestens drei Ausgangsabschnitte (121, 122, 123) befindet.

21. Verfahren zum Verbinden eines Einsteckmoduls (2, 102) mit einem ersten Endverbinder (91) eines ersten Kabels (H1) in einer Wanddose (6, 106) unter Verwendung des Satzes (1, 101) nach einem der Ansprüche 17 bis 20, wobei das Verfahren die folgenden Schritte umfasst:
- Einstecken des Einsteckkörpers (20) in die Wanddose (6, 106) in der Einsteckrichtung (P) hin zu einem ersten Endverbinder (91), der sich zumindest teilweise entlang einer zur Verbindungsrichtung (C) parallelen Verbindungsachse (D) in die Wanddose (6, 106) erstreckt;
- Zulassen, dass sich der Verbindungsmechanismus (3) als Reaktion auf das weitere Einstecken des Einsteckkörpers (20) in die Wanddose (6, 106) in der Einsteckrichtung (P) selbst mit dem ersten Endverbinder (91) ausrichtet; und
- Zulassen, dass sich der Verbindungsmechanismus (3) als Reaktion auf das weitere Einstecken des Einsteckkörpers (20) in die Wanddose (6, 106) in der Einsteckrichtung (P) selbst mit dem ersten Endverbinder (91) in der Verbindungsrichtung (C) verbindet.

## Revendications

1. Module d'enfichage (2, 102) pour une connexion à un premier connecteur d'extrémité (91) d'un premier câble (H1) à l'intérieur d'un boîtier mural (6, 106), dans lequel le module d'enfichage (2, 102) comprend un côté avant (S1) pour recevoir un panneau avant (10, 110), un côté arrière (S2) opposé au côté avant (S1) et un corps d'enfichage (20) s'étendant dans une direction d'enfichage (P) du côté avant (S1) vers le côté arrière (S2) pour un enfichage dans le boîtier mural (6, 106) dans ladite direction d'enfichage (P), **caractérisé par le fait que** le module d'enfichage (2, 102) comprend en outre un mécanisme de couplage (3) qui est disposé pour un auto-alignement avec le premier connecteur d'extrémité (91) et pour une auto-connexion au premier connecteur d'extrémité (91) dans une direction de connexion (C) transversale ou perpendiculaire à la direction d'enfichage (P) en réponse à l'enfichage du corps d'enfichage (20) dans le boîtier mural (6, 106) dans la direction d'enfichage (P).

2. Module d'enfichage (2, 102) selon la revendication 1, dans lequel le mécanisme de couplage (3) comprend un premier élément de positionnement (31) qui est mobile par rapport au corps d'enfichage (20) pour s'auto-aligner avec le premier connecteur d'extrémité (91),
de préférence, dans lequel le premier élément de positionnement (31) est mobile par rapport au corps d'enfichage (20) dans une ou plusieurs directions parmi la direction d'enfichage (P), la direction de connexion (C) et une direction latérale (L) transversale à la direction de connexion (C) et à la direction d'enfichage (P) ; et/ou
dans lequel le premier élément de positionnement (31) est mobile par rapport au corps d'enfichage (20) autour d'un ou plusieurs axes parmi un axe d'enfichage (Q) parallèle à la direction d'enfichage (P), un axe de connexion (D) parallèle à la direction de connexion (C) et un axe latéral (M) parallèle à une direction latérale (L) transversale à la direction de connexion (C) et à la direction d'enfichage (P).

3. Module d'enfichage (2, 102) selon la revendication 2, dans lequel le mécanisme de couplage (3) comprend un support (30) pour maintenir le premier élément de positionnement (31) par rapport au corps d'enfichage (20),
de préférence, dans lequel le support (30) comprend un ou plusieurs éléments flexibles (35) pour assurer une liberté de mouvement du premier élément de positionnement (31) par rapport au corps d'enfichage (20).

4. Module d'enfichage (2, 102) selon la revendication 3, dans lequel le support (30) comprend une première carte de circuits imprimés (33),
de préférence, dans lequel la première carte de circuits imprimés (33) est flexible.

5. Module d'enfichage (2, 102) selon la revendication 3 ou 4, dans lequel le module d'enfichage (2, 102) comprend une seconde carte de circuits imprimés (34) qui est fixe par rapport au corps d'enfichage (20), dans lequel le support (30) est disposé au-dessous de la seconde carte de circuits imprimés (34) dans la direction d'enfichage (P).

6. Module d'enfichage (2, 102) selon l'une quelconque des revendications 2 à 5, dans lequel le premier connecteur d'extrémité (91) comporte une bride (97), dans lequel le premier élément de positionnement (31) comprend un ou plusieurs crochets (36) pour s'accrocher à ladite bride (97) dans la direction d'enfichage (P),
de préférence, dans lequel chaque crochet (36) du ou des crochets (36) définit une surface de calage interne (W) qui est disposée à un angle oblique par rapport à la direction d'enfichage (P) pour tirer progressivement la bride (97) dans une direction d'entrée (E) parallèle à la direction de connexion (C) lors de l'enfichage du corps d'enfichage (20) dans le boîtier mural (6, 106) dans la direction d'enfichage (P),
de façon davantage préférée, dans lequel chaque crochet (36) du ou des crochets (36) comprend un corps en forme de crochet (37) et un doigt élastique (38) s'étendant à l'intérieur dudit corps en forme de crochet (37) pour définir la surface de calage interne (W).

7. Module d'enfichage (2, 102) selon l'une quelconque des revendications 2 à 6, dans lequel le mécanisme de couplage (3) comprend un second élément de positionnement (32) espacé du premier élément de positionnement (31) et mobile par rapport au corps d'enfichage (20) pour s'auto-aligner avec et s'auto-connecter à un second connecteur d'extrémité (92) d'un second câble (H2),
de préférence, dans lequel le second élément de positionnement (32) est mobile en même temps que le premier élément de positionnement (31).

8. Module d'enfichage (2, 102) selon l'une quelconque des revendications précédentes, dans lequel le corps d'enfichage (20) comprend un logement (23) ayant une paroi arrière (24) qui définit le côté arrière (S2) du module d'en-fichage (2, 102) et une paroi périphérique (25) reliée à ladite paroi arrière (24), dans lequel le module d'enfichage (2, 102) comporte une ouverture de réception de connecteur (26) s'étendant en continu à la fois dans la paroi arrière (24) et dans la paroi périphérique (25) pour recevoir le premier connecteur d'extrémité (91) au moins partiellement à l'intérieur du logement (23) lorsque le module d'enfichage (2, 102) est enfiché dans le boîtier mural (6, 106) dans la direction d'enfichage (P).

9. Module d'enfichage (2, 102) selon l'une quelconque des revendications précédentes, dans lequel le premier câble (H1) est un câble hybride ayant un ou plusieurs premiers conducteurs (93) et un ou plusieurs seconds conducteurs (94) d'un type différent de celui du ou des premiers conducteurs (93), dans lequel le mécanisme de couplage (3) est disposé pour s'auto-aligner avec et s'auto-connecter au ou aux premiers conducteurs (93),
de préférence, dans lequel le ou les premiers conducteurs (93) sont des conducteurs optiques, de préférence des fibres optiques et de façon davantage préférée des fibres optiques plastiques, dans lequel le mécanisme de couplage (3) comprend un ou plusieurs connecteurs optiques (39) pour se connecter audit ou auxdits premiers conducteurs (93).

10. Module d'enfichage (2, 102) selon la revendication 9, dans lequel un adaptateur (7) est disposé sur le boîtier mural (6, 106) pour adapter le premier connecteur d'extrémité (91) au boîtier mural (6, 106) dans une direction d'entrée (E) parallèle à la direction de connexion (C), dans lequel le module d'enfichage (2, 102) comprend l'une parmi une prise mâle et une prise femelle (40) pour établir une connexion à contacts mâle et femelle entre le module d'enfichage (2, 102) et l'adaptateur (7) dans la direction d'enfichage (P),
de préférence, dans lequel l'adaptateur (7) définit un ou plusieurs chemins conducteurs (84, 85, 86) pour établir une connexion conductrice entre le ou les seconds conducteurs (94) dans la direction de connexion (C) et l'une de ladite prise mâle et de ladite prise femelle (40) dans la direction d'enfichage (P),
de façon davantage préférée, dans lequel le ou les seconds conducteurs (94) sont des conducteurs électriques, dans lequel l'une de ladite prise mâle et de ladite prise femelle (40) du module d'enfichage (2, 102) comprend un ou plusieurs contacts (41, 42, 43) pour établir un contact électrique avec ledit ou lesdits chemins conducteurs (84, 85, 86) dans la direction d'enfichage,
de la façon que l'on préfère le plus, dans lequel ledit ou lesdits contacts (41, 42, 43) sont configurés pour établir un contact électrique même lorsque l'une de ladite prise mâle et de ladite prise femelle (40) du module d'enfichage (2, 102) n'est pas entièrement alignée avec ledit ou lesdits chemins conducteurs (84, 85, 86).

11. Module d'enfichage (2, 102) selon l'une quelconque des revendications précédentes, dans lequel le module d'enfichage (2, 102) comporte un ou plusieurs premiers guides convexes (51, 151) et un ou plusieurs seconds guides convexes (52, 152) respectivement sur un premier côté latéral (S3) et sur un second côté latéral (S4) du corps d'enfichage (20) dans une direction latérale (L) perpendiculaire à la direction d'enfichage (P) et à la direction de connexion (C) pour s'engager dans des guides concaves (61, 62, 161, 162) sur le boîtier mural (6, 106).

12. Module d'enfichage (2, 102) selon la revendication 11, dans lequel le ou les premiers guides convexes (51) et le ou les seconds guides convexes (52) sont concentriques par rapport à un axe d'inclinaison (T1, T101) parallèle à la direction d'enfichage (P).

13. Module d'enfichage (2, 102) selon la revendication 12, dans lequel l'axe d'inclinaison (T1) est disposé à un centre entre le premier côté latéral (S3) et le second côté latéral (S4) ; ou
dans lequel le ou les premiers guides convexes (51) et le ou les seconds guides convexes (52) ont le même rayon (R1, R2) par rapport à l'axe d'inclinaison (T1).

14. Module d'enfichage (2, 102) selon la revendication 12, dans lequel l'axe d'inclinaison (T101) est disposé excentré par rapport à un centre entre le premier côté latéral (S3) et le second côté latéral (S4) ; ou
dans lequel le ou les premiers guides convexes (151) sont disposés à un premier rayon (R101) par rapport à l'axe d'inclinaison (T101) et le ou les seconds guides convexes (152) sont disposés à un second rayon (R102) par rapport à l'axe d'inclinaison (T101), différent du premier rayon (R101),
de préférence, dans lequel le module d'enfichage (102) est disposé pour se connecter au premier connecteur d'extrémité (91) dans une zone de connexion (F) qui est excentrée par rapport à un centre entre le premier côté latéral (S3) et le second côté latéral (S4) dans la même direction que l'axe d'inclinaison (T101).

15. Module d'enfichage (2, 102) selon l'une quelconque des revendications 11 à 14, dans lequel chaque guide convexe (51, 52, 151, 152) du ou des premiers guides convexes (51, 151) et du ou des seconds guides convexes (52, 152), en section transversale, définit une dent (50) qui est disposée pour un engagement réglable par étapes avec les guides concaves (61, 62, 161, 162) sur le boîtier mural (6, 106),
de préférence, dans lequel la dent (50) est disposée pour l'engagement réglable par étapes d'une seule manière dans la direction d'enfichage (P).

16. Module d'enfichage (2, 102) selon l'une quelconque des revendications précédentes, dans lequel le module d'enfichage (102) comprend au moins trois sections de sortie (121, 122, 123) ayant chacune un ou plusieurs ports ou une unité de communication pour une connexion à des appareils externes, dans lequel les au moins trois sections de sortie (121, 122, 123) sont disposées côte à côte entre un premier côté latéral (S3) et un second côté latéral (S4) du corps d'enfichage (102) dans une direction latérale (L) perpendiculaire à la direction d'enfichage (P) et à la direction de connexion (C), dans lequel le module d'enfichage (102) est disposé pour se connecter au premier connecteur d'extrémité (91) dans une zone de connexion (F) qui est excentrée par rapport à un centre entre le premier côté latéral (S3) et le second côté latéral (S3),
de préférence, dans lequel la zone de connexion (F) est située dans la direction latérale (L) entre le premier côté latéral (S3) et un centre entre une paire de sections de sortie (121, 122) des au moins trois sections de sortie (121, 122, 123) adjacentes au premier côté latéral (S3).

17. Ensemble (1, 101) d'un module d'enfichage (2, 102) selon l'une quelconque des revendications précédentes et d'un boîtier mural (6, 106),
de préférence, dans lequel le boîtier mural (6, 106) est disposé pour recevoir le premier câble (H1) le long d'un axe de connexion (D) parallèle à la direction de connexion (C).

18. Ensemble (1, 101) selon la revendication 17, dans lequel l'ensemble (1, 101) comprend en outre un adaptateur (7) disposé sur le boîtier mural (6, 106) pour adapter le premier connecteur d'extrémité (91) audit boîtier mural (6, 106) dans une direction d'entrée (E) parallèle à la direction de connexion (C),
de préférence, dans lequel l'adaptateur (7) comprend un ou plusieurs trous traversants (75) pour passer à travers au moins une partie du premier connecteur d'extrémité (91) dans la direction d'entrée (E) pour une connexion directe au mécanisme de couplage (3) du module d'enfichage (2, 102).

19. Ensemble (1, 101) selon la revendication 18, dans lequel l'adaptateur (7) est apte à être retiré du boîtier mural (6, 106).

20. Ensemble (101) selon la revendication 18 ou 19, dans lequel l'adaptateur (7) est disposé à une position d'adaptateur (G) qui est excentrée par rapport à un centre entre un premier côté latéral (S3) et un second côté latéral (S4) du corps d'enfichage (20) dans une direction latérale (L) perpendiculaire à la direction d'enfichage (P) et à la direction de connexion (C),
de préférence, dans lequel le module d'enfichage (102) comprend au moins trois sections de sortie (121, 122, 123) ayant chacune un ou plusieurs ports ou une unité de communication pour une connexion à des appareils externes, dans lequel les au moins trois sections de sortie (121, 122, 123) sont disposées côte à côte entre un premier côté latéral (S3) et un second côté latéral (S4) du corps d'enfichage (20) dans la direction latérale (L), dans lequel la position d'adaptateur (G) est située, lorsque le corps d'enfichage (20) est enfiché dans le boîtier mural (106), dans la direction latérale (L) entre le premier côté latéral (S3) et un centre entre une paire de sections de sortie (121, 122) des au moins trois sections de sortie (121, 122, 123) adjacentes au premier côté latéral (S3).

21. Procédé de connexion d'un module d'enfichage (2, 102) à un premier connecteur d'extrémité (91) d'un premier câble (H1) à l'intérieur d'un boîtier mural (6, 106) à l'aide de l'ensemble (1, 101) selon l'une quelconque des revendications 17 à 20, dans lequel le procédé comprend les étapes consistant à :
- enficher le corps d'enfichage (20) dans le boîtier mural (6, 106) dans la direction d'enfichage (P) vers un premier connecteur d'extrémité (91) s'étendant au moins partiellement dans le boîtier mural (6, 106) le long d'un axe de connexion (D) parallèle à la direction de connexion (C) ;
- amener le mécanisme de couplage (3) à s'auto-aligner avec le premier connecteur d'extrémité (91) en réponse à l'enfichage du corps d'enfichage (20) plus loin dans le boîtier mural (6, 106) dans la direction d'enfichage (P) ; et
- amener le mécanisme de couplage (3) à s'auto-connecter au premier connecteur d'extrémité (91) dans la direction de connexion (C) en réponse à l'enfichage du corps d'enfichage (20) plus loin dans le boîtier mural (6, 106) dans la direction d'enfichage (P).
